# EUROPÄISCHE PATENTANMELDUNG

(11) **EP 4 707 626 A1**
(43) Veröffentlichungstag der Anmeldung: **11.03.2026**
(21) Anmeldenummer: 25200978.2
(22) Anmeldetag: 09.09.2025
(51) Int. Cl.: F16C 29/06

(54) **LINEARE ROLLEN-PROFILSCHIENENFÜHRUNG MIT MEHREREN PARALLEL ZUEINANDER ZIRKULIERENDEN REIHEN VON ROLLEN ZUR REDUKTION VON HUBPULSATIONEN**

(30) Priorität: 09.09.2024 EP 24199349
(71) Anmelder: Schneeberger Holding AG, 4914 Roggwil (CH)
(72) Erfinder: JÜNGLING, Marcel, 75228 Ispringen (DE); NETZ, Konstantin, 75323 Bad Wildbad (DE); DANN, Thomas, 76307 Karlsbad (DE)
(74) Vertreter: EGLI-EUROPEAN PATENT ATTORNEYS

(57) **Zusammenfassung**

Die Lineare Rollen-Profilschienenführung umfasst eine Profil-Führungsschiene mit mindestens vier Rollen-Laufbahnoberflächen und einen in der Längsrichtung der Profil-Führungsschiene bewegbaren Führungswagen (10) mit mindestens vier an einem Grundkörper (11) ausgebildeten Rollen-Laufbahnoberflächen. Am Führungswagen (10) sind mindestens vier vollrollig ausgebildete Rollen-Umlenkungsvorrichtungen (UV1, UV2) für jeweils mehrere nebeneinander angeordnete Reihen von Rollen (R1, R2) angeordnet, wobei in einem Rollen-Umlaufkanal einer der Rollen-Umlenkungsvorrichtungen (UV1, UV2) bei einer Bewegung des Führungswagens (10) in der Längsrichtung der Profil-Führungsschiene die Rollen (R1) einer ersten Reihe von Rollen und die Rollen (R2) einer zweiten Reihe von Rollen nebeneinander entlang einer ringförmig geschlossenen Rollen-Umlaufbahn jeweils parallel zu einer vorgegebenen ersten Ebene (E1, E2) zirkulieren. In dem Rollen-Umlaufkanal der jeweiligen Rollen-Umlenkungsvorrichtung (UV1, UV2) ist ein Trennsteg (TS) angeordnet, welcher sich zwischen der ersten Reihe von Rollen (R1) und der zweiten Reihe von Rollen (R2) erstreckt und die Rollen (R1) der ersten Reihe von Rollen von den Rollen (R2) der zweiten Reihe von Rollen räumlich separiert.

## Beschreibung

### Technisches Gebiet

Die Erfindung bezieht sich auf eine lineare Rollen-Profilschienenführung, insbesondere auf eine lineare Rollen-Profilschienenführung mit einer Profil-Führungsschiene, welche mindestens vier ebene, sich in einer Längsrichtung der Profil-Führungsschiene erstreckende Rollen-Laufbahnoberflächen aufweist, und mit einem linear in der Längsrichtung der Profil-Führungsschiene bewegbaren Führungswagen, welcher einen Grundkörper umfasst, an welchem mindestens vier ebene, sich in einer Längsrichtung der Profil-Führungsschiene erstreckende Rollen-Laufbahnoberflächen ausgebildet sind.

### Stand der Technik

Lineare Rollen-Profilschienenführung der vorstehend genannten Art haben zahlreiche Anwendungen, u.a. zur präzisen und schnellen Positionierung von Gegenständen.

Der Führungswagen ist hierbei mittels Rollen auf der Profil-Führungsschiene gelagert. Um eine lineare Bewegung des Führungswagen in der Längsrichtung der Führungsschiene zu ermögliche, ist der Führungswagen mit mehreren (mindestens vier) Rollen-Umlenkungsvorrichtungen versehen, welche jeweils einen sich ringförmig erstreckenden Rollen-Umlaufkanal umfasst, welcher Rollen-Umlaufkanal eine ringförmig geschlossene Rollen-Umlaufbahn definiert. In dem Rollen-Umlaufkanal sind in der Regel eine Reihe von Rollen derart angeordnet, dass die Rollen der jeweiligen Reihe von Rollen bei einer Bewegung des Führungswagens in der Längsrichtung der Profil-Führungsschiene hintereinander durch den Rollen-Umlaufkanal bewegt werden, sodass die Rollen entlang der ringförmig geschlossenen Rollen-Umlaufbahn der jeweiligen Rollen-Umlenkungsvorrichtung zirkulieren.

Bei einer linearen Bewegung des Führungswagens in der Längsrichtung der Profil-Führungsschiene zirkulieren die Rollen durch verschiedene Abschnitte des Rollen-Umlaufkanals, in welchen die Rollen jeweils unterschiedlich grossen mechanischen Belastungen ausgesetzt sind. Die Rollen einer Rollen-Umlenkungsvorrichtung durchlaufen jeweils nacheinander beispielsweise einen ersten Abschnitt des Rollen-Umlaufkanals, der durch jeweils eine der Rollen-Laufbahnoberflächen der Profil-Führungsschiene und jeweils eine der Rollen-Laufbahnoberflächen des Grundkörpers, welche sich (im Wesentlichen) parallel zu der jeweiligen einen der Rollen-Laufbahnoberflächen der Profil-Führungsschiene erstreckt, begrenzt ist. Die Rollen, welche sich momentan in diesem ersten Abschnitt des Rollen-Umlaufkanals befinden, sind jeweils einer relativ grossen mechanischen Belastung ausgesetzt, da der Durchmesser der Rollen derart gewählt wird, dass die Rollen zwischen der Rollen-Laufbahnoberfläche der Profil-Führungsschiene und der Rollen-Laufbahnoberflächen des Grundkörpers, welche den ersten Abschnitt des Rollen-Umlaufkanals begrenzen, geklemmt sind und deshalb unter einer mechanisch Spannung stehen. Der vorstehend genannte erste Abschnitt des Rollen-Umlaufkanals wird deshalb auch als «Lastzone» des Rollen-Umlaufkanals bzw. als «lastragende» Zone des Rollen-Umlaufkanals bezeichnet. Die Rollen, welche momentan ausserhalb des vorstehend genannten ersten Abschnitts des Rollen-Umlaufkanals zirkulieren, sind hingegen keinen mechanischen Belastungen ausgesetzt. Der Bereich des Rollen-Umlaufkanals, welcher sich ausserhalb der «Lastzone» des Rollen-Umlaufkanals befindet, wird deshalb auch als «unbelastete» Zone bezeichnet.

Lineare Rollen-Profilschienenführungen der vorstehend genannten Art haben die Eigenschaft, dass sie für Anwendungen geeignet sind, bei welchen der Führungswagen eine hohe Last senkrecht zur Längsachse der Profil-Führungsschiene aufnehmen muss. Des Weiteren können die mindestens vier Rollen-Umlenkungsvorrichtungen relativ zueinander derart angeordnet sein, dass der Führungswagen hohe Belastungen in beliebige Richtungen senkrecht zur Längsachse der Profil-Führungsschiene aufnehmen kann.

Lineare Rollen-Profilschienenführung der vorstehend genannten zeigen bei einer Bewegung des Führungswagens in der Längsrichtung einer Führungsschiene in der Regel sogenannte «Hubpulsationen» des Führungswagens. Als «Hubpulsationen» bezeichnet man Mikrobewegungen des Führungswagens in Form von Hub-und Senkbewegungen senkrecht zur Längsrichtung der Führungsschiene, welche bei einer Bewegung des Führungswagens in der Längsrichtung der Führungsschiene periodisch in Abhängigkeit von dem in der Längsrichtung der Führungsschiene zurückgelegten Weges auftreten. Eine wesentliche Ursache für derartige Hubpulsationen ist darin zu sehen, dass der Führungswagen momentan ausschliesslich durch diejenigen Rollen auf die Führungsschiene gestützt ist, welche sich momentan in der Lastzone des Rollen-Umlaufkanals der jeweiligen Rollen-Umlenkungsvorrichtungen des Führungswagens befinden, und dass die Rollen in den Lastzonen der jeweiligen Rollen-Umlaufkanäle in der Regel immer unter einer mechanischen Vorspannung stehen. Aufgrund dieser mechanischen Vorspannung der Rollen weisen auch der Grundkörper des Führungswagens und die Führungsschiene jeweils lokal in der Nähe der sich in den Lastzonen der jeweiligen Rollen-Umlaufkanäle befindenden Rollen elastische Deformationen auf. Bei einer Bewegung des Führungswagens in der Längsrichtung der Führungsschiene zirkulieren die Rollen in den Rollen-Umlaufkanälen der jeweiligen Rollen-Umlenkungsvorrichtungen derart, dass die Rollen einer der Reihen von Rollen die Lastzone eines Rollen-Umlaufkanals jeweils nacheinander in einer Richtung durchlaufen, sodass kontinuierlich an einem Ende der Lastzone einzelne Rollen nacheinander aus der unbelasteten Zone des Rollen-Umlaufkanals in die Lastzone eintreten, während am anderen Ende der Lastzone kontinuierlich einzelne Rollen nacheinander die Lastzone verlassen müssen, um wieder in die unbelastete Zone des Rollen-Umlaufkanals einzutreten. Bei einer Bewegung des Führungswagens in der Längsrichtung der Führungsschiene ist deshalb die Anzahl der Wälzkörper, welche sich momentan in der Lastzone eines der Rollen-Umlaufkanäle befinden, nicht konstant, sondern variiert periodisch als Funktion des vom Führungswagens zurückgelegten Weges. Diese Variation der Anzahl der sich momentan in den Lastzonen der Rollen-Umlaufkanäle befindenden Rollen hat zur Folge, dass sich bei einer Bewegung des Führungswagens in der Längsrichtung der Führungsschiene die lokalen elastischen Deformationen des Grundkörpers des Führungswagens und der Führungsschiene in der Nähe der Lastzonen der Rollen-Umlaufkanäle periodisch ändern. Diese periodischen Änderungen der elastischen Deformationen des Grundkörpers des Führungswagens und der Führungsschiene haben schliesslich den Effekt, dass ein beliebiger Punkt des Führungswagens bei einer Bewegung des Führungswagens in der Längsrichtung der Führungsschiene messbare periodische Hub- und Senkbewegungen («Hubpulsationen») quer zur Längsrichtung der Führungsschiene ausführt.

Derartige Hubpulsationen des Führungswagens können bei konventionellen Rollen-Profilschienenführung eine Amplitude von ca. 1-2 µm haben. Hubpulsationen dieser Grössenordnung können die Positioniergenauigkeit der Rollen-Profilschienenführung derart limitieren, dass die Hubpulsationen die Verwendbarkeit der Rollen-Profilschienenführung bei einer Reihe von Anwendungen beeinträchtigen, beispielsweise bei Anwendungen zur Positionierung von Werkzeugen zur hochpräzisen Bearbeitung von Oberflächen von Werkstücken, beispielsweise zum Herstellen von glatten ebenen Oberflächen mittels Schleifen an Teilen für geräuscharme Getriebe für Anwendungen in der Elektromobilität. Dementsprechend besteht ein Bedarf, Hubpulsationen weitgehend zu reduzieren.

Ein einfaches Konzept, bei einer Rollen-Profilschienenführung mit Rollen vorgegebener Grösse die Amplitude der Hubpulsationen zu reduzieren, besteht darin, die Länge des Führungswagens und die Längen der Lastzonen der Rollen-Umlaufkanäle zu vergrössern, sodass die Anzahl der Rollen, welche sich gleichzeitig in der Lastzone eines Rollen-Umlaufkanals befinden, vergrössert wird. Dieses Konzept ist dadurch limitiert, dass vielfach Anforderungen an die Platzverhältnisse hinsichtlich der Anordnung des Führungswagens zu berücksichtigen sind, welche die Wahl einer grösseren Länge des Führungswagens nicht zulassen würden.

Sofern die Wahl einer grösseren Länge des Führungswagens (bzw. die Wahl einer grösseren Länge der Lastzone eines Rollen-Umlaufkanals) nicht möglich oder nicht erwünscht ist, kann ein alternatives Konzept zur Reduktion der Hubpulsationen darin bestehen, die jeweiligen Rollen-Umlenkungsvorrichtungen so auszubilden, dass in dem Rollen-Umlaufkanal einer Rollen-Umlenkungsvorrichtung mehrere (beispielsweise zwei) Reihen von Rollen nebeneinander angeordnet sind, sodass bei einer Bewegung des Führungswagens in der Längsrichtung der Führungsschiene jeweils mehrere (beispielsweise zwei) Reihen von Rollen nebeneinander durch den Rollen-Umlaufkanal zirkulieren und dementsprechend nebeneinander durch die Lastzone des Rollen-Umlaufkanals bewegt werden.

Die Druckschrift DE 11 2012 003 767 B4 beschreibt beispielsweise eine Rollen-Profilschienenführung, bei welcher sowohl vier Rollen-Laufbahnoberflächen der Führungsschiene als auch vier Rollen-Laufbahnoberflächen des Führungswagens in einem Querschnitt senkrecht zur Längsrichtung der Führungsschiene jeweils ein kreisbogenförmiges Profil aufweisen. Eine Ausführungsform dieser Rollen-Profilschienenführung umfasst vier Rollen-Umlenkungsvorrichtungen, in welchen jeweils zwei Reihen von Rollen nebeneinander angeordnet sind und nebeneinander durch einen Rollen-Umlaufkanal zirkulieren können. Die Rollen der nebeneinander angeordneten Reihen von Rollen sind mit einem Gurt aus Kunstharz miteinander verbunden, sodass Rollen der einen Reihe von Rollen mit Rollen der anderen Reihe von Rollen über den Gurt miteinander verbunden sind. Der Gurt wird benötigt, um die Drehachsen der Rollen der beiden nebeneinander angeordneten Reihen von Rollen relativ zueinander in verschiedenen Abschnitten des Rollen-Umlaufkanals unterschiedlich auszurichten. Des Weiteren werden durch den Gurt aufeinanderfolgende Rollen jeder der zwei Reihen von Rollen relativ zueinander in einem Abstand gehalten. Diese ProfilRollen-Umlenkungsvorrichtung hat den Nachteil, dass die Implementierung des Gurts aufwändig ist und der Gurt verschleissanfällig ist.

Die Druckschrift JPH06300039 (A) beschreibt eine Rollen-Profilschienenführung mit vier ebenen Rollen-Laufbahnoberflächen der Führungsschiene und vier ebenen Rollen-Laufbahnoberflächen des Führungswagens. Diese Rollen-Profilschienenführung umfasst vier Rollen-Umlenkungsvorrichtungen, in welchen jeweils zwei Reihen von Rollen nebeneinander angeordnet sind und nebeneinander durch einen Rollen-Umlaufkanal zirkulieren können. Jede der Rollen-Umlenkungsvorrichtungen ist im vorliegenden Fall «vollrollig» ausgebildet, d.h. die Rollen, welche im Rollen-Umlaufkanal einer Rollen-Umlenkungsvorrichtung angeordnet sind, sind nicht mittels eines Gurts oder einer Kette miteinander verbunden, und ausserdem sind keine technischen Mittel vorhanden, welche zwei aufeinanderfolgende Rollen einer der zwei Reihen von Rollen voneinander trennen bzw. auf Distanz halten. Dementsprechend können die Rollen derart im Rollen-Umlaufkanal zirkulieren, dass unmittelbar aufeinanderfolgende Rollen sich an ihren Mantelflächen berühren können. Die jeweils zwei Reihen von Rollen sind in dem Rollen-Umlaufkanal derart nebeneinander angeordnet, dass sich zwei nebeneinander angeordnete Rollen an ihren einander zugewandten Stirnflächen berühren. Dies hat den Nachteil, dass nebeneinander angeordnete Rollen sich bei einer Zirkulation durch den Rollen-Umlaufkanal gegenseitig störend beeinflussen und sich beispielsweise gegenseitig blockieren können. Dies erhöht den Verschleiss der Rollen und reduziert deren Lebensdauer.

Die Druckschrift US 2015/0159695 A1 offenbart eine lineare Rollen-Profilschienenführung mit einer linearen Profilschiene und einem Führungswagen. Diese Rollen-Profilschienenführung weist vier Rollen-Umlaufkanäle auf, wobei in jedem der Rollen-Umlaufkanäle jeweils zwei Reihen von Rollen nebeneinander angeordnet und die Rollen dieser zwei Reihen von Rollen bei einer Bewegung des Führungswagens in Längsrichtung der Profilschiene jeweils nebeneinander und parallel zu einer Ebene durch den jeweiligen Umlaufkanal zirkulieren. In jedem der Rollenumlaufkanäle sind eine Mehrzahl Separator-Elemente angeordnet, wobei die einzelnen Separator-Elemente in dem jeweiligen Rollenumlaufkanal jeweils in einer Reihe hintereinander angeordnet sind. Jedes der Separator-Elemente ist zwischen die in dem Rollenumlaufkanal angeordneten Rollen platziert, sodass ein einzelnes Separator-Element: mindestens zwei aufeinanderfolgende Rollen einer der zwei im jeweiligen Rollenumlaufkanäle angeordneten Reihen von Rollen voneinander separiert bzw. auf einen Abstand zueinander hält; mindestens zwei aufeinanderfolgende Rollen der anderen der zwei im jeweiligen Rollenumlaufkanal angeordneten Reihen von Rollen voneinander separiert bzw. auf einen Abstand zueinander hält, und jeweils eine Rolle einer der zwei im jeweiligen Rollenumlaufkanal angeordneten Reihen von Rollen von zwei Rollen der anderen der zwei im jeweiligen Rollenumlaufkanal angeordneten Reihen von Rollen voneinander separiert. Jedes einzelne Separator-Element ist dabei an mindestens zwei aufeinanderfolgende Rollen einer der zwei im jeweiligen Rollenumlaufkanäle angeordneten Reihen von Rollen und an mindestens zwei aufeinanderfolgende Rollen der anderen der zwei im jeweiligen Rollenumlaufkanäle angeordneten Reihen von Rollen derart gekoppelt, dass bei einer Bewegung des Führungswagens in Längsrichtung der Profilschiene alle Separator-Elemente synchron mit den jeweils im jeweiligen Rollenumlaufkanal angeordneten Rollen mitbewegt werden und ausserdem die Rollen der einen der zwei im jeweiligen Rollenumlaufkanal angeordneten Reihen von Rollen nur synchron mit den Rollen der anderen der zwei im jeweiligen Rollenumlaufkanal angeordneten Reihen von Rollen bewegt werden können. Jedes einzelne Separator-Element ist derart geformt, dass es mehrere unterschiedlich angeordnete Abschnitte aufweist: eine Isolationswand, welcher zwischen den zwei Reihen von Rollen angeordnet ist, sodass die Isolationswand in einem gleitenden Kontakt steht mit der Stirnfläche einer Rolle der einen der zwei im jeweiligen Rollenumlaufkanäle angeordneten Reihen von Rollen und mit den Stirnflächen von zwei Rollen der anderen der zwei im jeweiligen Rollenumlaufkanäle angeordneten Reihen von Rollen; einen ersten Trennabschnitt, welcher zwei mit der Isolationswand verbundene Schenkel aufweist, welche sich an einer ersten Seite der Isolationswand erstrecken, sodass die beiden Schenkel eine Rolle der einen der zwei im jeweiligen Rollenumlaufkanäle angeordneten Reihen von Rollen im Bereich der Mantelfläche der Rolle umgreifen; einen zweiten Trennabschnitt, welcher sich an einer (dem ersten Trennabschnitt gegenüberliegenden) zweiten Seite der Isolationswand derart erstreckt, dass sich der zweite Trennabschnitt zwischen zwei aufeinanderfolgenden Rollen der anderen der zwei im jeweiligen Rollenumlaufkanäle angeordneten Reihen von Rollen erstreckt und diese zwei Rollen voneinander separiert. Bei dieser Rollen-Profilschienenführung ist die Isolationswand eines Separator-Elements jeweils mit dem ersten Trennabschnitt und dem zweiten Trennabschnitt verbunden. Das Vorhandensein des ersten Trennabschnitts und des zweiten Trennabschnitts des jeweiligen Separator-Elements resultiert darin, dass die Rollen-Umlenkungsvorrichtung dieser Rollen-Profilschienenführung nicht «vollrollig» ausgebildet. Dies hat den nachteiligen Effekt, dass die maximale Tragkraft der Rollen-Profilschienenführung wegen des Vorhandenseins der jeweiligen Trennabschnitte reduziert ist. Zudem ist die Implementierung einer Vielzahl der Separator-Elemente in Kombination mit einer Vielzahl von in zwei Reihen angeordneten Rollen in einem Rollenumlaufkanal aufwändig.

### Zusammenfassung der Erfindung

Der vorliegenden Erfindung liegt die Aufgabe zugrunde, die genannten Nachteile zu vermeiden, und eine lineare Rollen-Profilschienenführung mit einer vollrollig ausgebildeten Rollen-Umlenkungsvorrichtung für mehrere nebeneinander angeordnete Reihen von Rollen zu schaffen, welche eine verbesserte Führung der nebeneinander angeordneten Reihen von Rollen mit einem geringeren Verschleiss für die Rollen ermöglicht.

Diese Aufgabe wird gelöst durch eine lineare Rollen-Profilschienenführung mit den Merkmalen des Patentanspruchs 1.

Die lineare Rollen-Profilschienenführung umfasst eine Profil-Führungsschiene, welche mindestens vier ebene, sich in einer Längsrichtung der Profil-Führungsschiene erstreckende Rollen-Laufbahnoberflächen aufweist, und einen Führungswagen, welcher in der Längsrichtung der Profil-Führungsschiene linear beweglich angeordnet ist und einen Grundkörper umfasst, an welchem mindestens vier ebene, sich in einer Längsrichtung der Profil-Führungsschiene erstreckende Rollen-Laufbahnoberflächen ausgebildet sind.

Die Rollen-Laufbahnoberflächen der Profil-Führungsschiene und die Rollen-Laufbahnoberflächen des Grundkörpers sind relativ zueinander derart angeordnet, dass jeweils eine der Rollen-Laufbahnoberflächen der Profil-Führungsschiene und jeweils eine der Rollen-Laufbahnoberflächen des Grundkörpers sich parallel zueinander erstrecken und gegenüberliegend in einem Abstand zueinander derart angeordnet sind, dass die jeweils eine der Rollen-Laufbahnoberflächen der Profil-Führungsschiene und die jeweils eine der Rollen-Laufbahnoberflächen des Grundkörpers einen lasttragenden Rollen-Durchgangskanal begrenzen.

Der Führungswagen weist - für jeden einzelnen der lasttragenden Rollen-Durchgangskanäle - jeweils eine dem jeweiligen einzelnen der lasttragenden Rollen-Durchgangskanäle zugeordnete, vollrollig ausgebildete Rollen-Umlenkungsvorrichtung für mehrere nebeneinander angeordnete Reihen von Rollen auf, welche Rollen-Umlenkungsvorrichtung am Grundkörper befestigt ist und einen sich ringförmig erstreckenden Rollen-Umlaufkanal umfasst, welcher Rollen-Umlaufkanal eine ringförmig geschlossene Rollen-Umlaufbahn für die nebeneinander angeordneten Reihen von Rollen definiert. Der Rollen-Umlaufkanal der Rollen-Umlenkungsvorrichtung umfasst: einen ersten Abschnitt des Rollen-Umlaufkanals, welcher mit dem jeweiligen einzelnen der lasttragenden Rollen-Durchgangskanäle identisch ist; einen zweiten Abschnitt des Rollen-Umlaufkanals, welcher sich in einem Abstand zum ersten Abschnitt des Rollen-Umlaufkanals in der Längsrichtung der Profil-Führungsschiene erstreckt; einen dritten und einen vierten Abschnitt des Rollen-Umlaufkanals, wobei der dritte Abschnitt des Rollen-Umlaufkanals eines von zwei gegenüberliegenden Enden des ersten Abschnitts des Rollen-Umlaufkanals mit einem von zwei gegenüberliegenden Enden des zweiten Abschnitts des Rollen-Umlaufkanals verbindet und der vierte Abschnitt des Rollen-Umlaufkanals das andere der zwei gegenüberliegenden Enden des ersten Abschnitts des Rollen-Umlaufkanals mit einem anderen der zwei gegenüberliegenden Enden des zweiten Abschnitts des Rollen-Umlaufkanals verbindet.

Die dem jeweiligen einzelnen der lasttragenden Rollen-Durchgangskanäle zugeordnete Rollen-Umlenkungsvorrichtung umfasst zumindest eine erste Reihe von Rollen und eine zweite Reihe von Rollen, wobei die erste Reihe von Rollen und die zweite Reihe von Rollen jeweils eine Mehrzahl hintereinander angeordneter Rollen aufweisen und die erste Reihe von Rollen und die zweite Reihe von Rollen im Rollen-Umlaufkanal der Rollen-Umlenkungsvorrichtung nebeneinander derart angeordnet sind, dass bei einer Bewegung des Führungswagens in der Längsrichtung der Profil-Führungsschiene die Rollen der ersten Reihe von Rollen und die Rollen der zweiten Reihe von Rollen nebeneinander entlang der ringförmig geschlossenen Rollen-Umlaufbahn durch den Rollen-Umlaufkanal jeweils parallel zu einer vorgegebenen ersten Ebene zirkulieren.

Gemäss der Erfindung weist der dem jeweiligen einzelnen der lasttragenden Rollen-Durchgangskanäle zugeordnete, vollrollig ausgebildete Rollen-Umlenkungsvorrichtung einen Trennsteg auf, welcher ortsfest relativ zum Grundkörper angeordnet ist und sich im Rollen-Umlaufkanal jeweils parallel zur ersten Ebene durch den ersten Abschnitt, den zweiten Abschnitt, den dritten Abschnitt und den vierten Abschnitt des Rollen-Umlaufkanals erstreckt und zwischen der ersten Reihe von Rollen und der zweiten Reihe von Rollen derart angeordnet ist, dass der Trennsteg die Rollen der ersten Reihe von Rollen von den Rollen der zweiten Reihe von Rollen räumlich separiert. Jede Rolle der ersten Reihe von Rollen grenzt mit einer Stirnfläche der jeweiligen Rolle an eine erste Seitenfläche des Trennstegs an, sodass jede Rolle der ersten Reihe von Rollen bei einer Bewegung des Führungswagens in der Längsrichtung der Profil-Führungsschiene an der ersten Seitenfläche des Trennstegs anliegt. Weiterhin grenzt jede Rolle der zweiten Reihe von Rollen mit einer Stirnfläche der jeweiligen Rolle an eine zweite Seitenfläche des Trennstegs an, sodass jede Rolle der zweiten Reihe von Rollen bei einer Bewegung des Führungswagens in der Längsrichtung der Profil-Führungsschiene an der zweiten Seitenfläche des Trennstegs geführt ist.

Demnach ist im Rollen-Umlaufkanal der jeweiligen Rollen-Umlenkungsvorrichtung ein Trennsteg implementiert, welcher die mindestens zwei im Rollen-Umlaufkanal Rollen-Umlenkungsvorrichtung angeordneten Reihen von Rollen voneinander separiert. Die Rollen der ersten Reihe von Rollen und die Rollen der zweiten Reihe von Rollen können deshalb im Rollen-Umlaufkanal nebeneinander jeweils parallel zur ersten Ebene durch den Rollen-Umlaufkanal zirkulieren, ohne dass die Rollen der ersten Reihe von Rollen und die Rollen der zweiten Reihe von Rollen an ihren Stirnflächen miteinander in Kontakt geraten können. Dadurch, dass der Trennsteg der jeweiligen Rollen-Umlenkungsvorrichtung ortsfest relativ zum Grundkörper angeordnet ist, wird erreicht, dass bei einer Bewegung des Führungswagens in der Längsrichtung der Profil-Führungsschiene die Rollen der ersten Reihe von Rollen und die Rollen der zweiten Reihe von Rollen nebeneinander entlang der ringförmig geschlossenen Rollen-Umlaufbahn durch den Rollen-Umlaufkanal derart zirkulieren, dass jede der Rollen der ersten Reihe von Rollen und jede der Rollen der zweiten Reihe von Rollen bei der Zirkulation entlang der ringförmig geschlossenen Rollen-Umlaufbahn relativ zum Trennsteg (insbesondere entlang der gesamten Erstreckung des Trennstegs in der Längsrichtung des Rollen-Umlaufkanals relativ zum Trennsteg) bewegbar ist. Im Vergleich zur der aus der Druckschrift JPH06300039 (A) bekannten Rollen-Profilschienenführung wird deshalb der Verschleiss der Rollen durch die Implementierung des Trennstegs reduziert. Des Weiteren dient der Trennsteg als seitliche Führungsfläche für die Stirnflächen von Rollen von mindestens einer der mehreren Reihen von Rollen. Dies ermöglicht eine Führung der Rollen mit einer erhöhten Stabilität.

Eine Ausführungsform der linearen Rollen-Profilschienenführung ist derart ausgebildet, dass der Trennsteg im Rollen-Umlaufkanal der Rollen-Umlenkungsvorrichtung derart angeordnet ist, das sich der Trennsteg lückenlos über die gesamte Länge des Rollen-Umlaufkanals entlang der ringförmig geschlossenen Rollen-Umlaufbahn für die nebeneinander angeordneten Reihen von Rollen erstreckt. Jede Rolle der ersten Reihe von Rollen ist hierbei bei einer Bewegung des Führungswagens in der Längsrichtung der Profil-Führungsschiene entlang der gesamten Erstreckung der Trennstegs in Längsrichtung des Rollen-Umlaufkanals relativ zum Trennsteg bewegbar, sodass die Rolle jeweils mit einer Stirnfläche der jeweiligen Rolle an die erste Seitenfläche des Trennstegs angrenzt. Entsprechend ist jede Rolle der zweiten Reihe von Rollen bei einer Bewegung des Führungswagens in der Längsrichtung der Profil-Führungsschiene entlang der gesamten Erstreckung des Trennstegs in der Längsrichtung des Rollen-Umlaufkanals relativ zum Trennsteg bewegbar, sodass die Rolle der zweiten Reihe von Rollen jeweils an der zweiten Seitenfläche des Trennstegs geführt ist. Dies ermöglicht eine Führung aller Rollen mit demselben Trennsteg mit einer besonders hohen Stabilität entlang der gesamten Länge der ringförmig geschlossenen Rollen-Umlaufbahn der Rollen.

Eine Ausführungsform der linearen Rollen-Profilschienenführung ist derart ausgebildet, dass der Grundkörper einen ersten Oberflächenbereich aufweist, welcher sich entlang des ersten Abschnitts des Rollen-Umlaufkanals jeweils parallel zur ersten Ebene derart erstreckt, dass Rollen der ersten Reihe von Rollen im ersten Abschnitt des Rollen-Umlaufkanals mit einer vom Trennsteg entfernten Stirnfläche der jeweiligen Rolle an dem ersten Oberflächenbereich des Grundkörpers anliegen und bei einer Bewegung des Führungswagens in der Längsrichtung der Profil-Führungsschiene an dem ersten Oberflächenbereich des Grundkörpers geführt sind.

Bei dieser Ausführungsform gewährleistet der erste Oberflächenbereich des Grundkörpers, dass die Rollen der ersten Reihe von Rollen im ersten Abschnitt des Rollen-Umlaufkanals, d.h. in der Lastzone des Rollen-Umlaufkanals, am ersten Oberflächenbereich des Grundkörpers seitlich mit einer grossen Stabilität geführt werden können. Dadurch, dass die Rollen der ersten Reihe mit einer Stirnfläche am Trennsteg anliegen, bewirkt die seitliche Führung der ersten Reihe von Rollen am ersten Oberflächenbereich des Grundkörpers indirekt auch eine Stabilisierung der räumlichen Lage des Trennstegs und ermöglicht auf diese Weise eine Führung der zweiten Reihe von Rollen am Trennsteg mit einer verbesserten Stabilität.

Eine weitere Ausführungsform der linearen Rollen-Profilschienenführung ist derart ausgebildet, dass die Rollen-Umlenkungsvorrichtung aus mehreren Einzelteilen zusammengesetzt ist und der Trennsteg mehrere Abschnitte aufweist, wobei
eines der Einzelteile einen Abschnitt des Trennstegs umfasst, welcher sich mindestens über einen Teil der Länge des ersten Abschnitts des Rollen-Umlaufkanals erstreckt, und/oder
eines der Einzelteile einen Abschnitt des Trennstegs umfasst, welcher sich mindestens über einen Teil der Länge des zweiten Abschnitts des Rollen-Umlaufkanals erstreckt, und/oder
eines der Einzelteile einen Abschnitt des Trennstegs umfasst, welcher sich mindestens über einen Teil der Länge des dritten Abschnitts des Rollen-Umlaufkanals erstreckt, und/oder
eines der Einzelteile einen Abschnitt des Trennstegs umfasst, welcher sich mindestens über einen Teil der Länge des vierten Abschnitts des Rollen-Umlaufkanals erstreckt.

Auf diese Weise wird die Implementierung eines Trennstegs über die gesamte Länge des Rollen-Umlaufkanals vereinfacht. Verschiedene Abschnitte des Trennstegs können beispielsweise für verschiedene Abschnitte des Rollen-Umlaufkanals mit unterschiedlichen Werkstoffen realisiert werden. Teile der Rollen-Umlenkungsvorrichtung und Abschnitte des Trennstegs können beispielsweise kostengünstig aus Kunststoff, beispielsweise mittels Spritzgiessen, hergestellt werden.

Eine Ausführungsform der linearen Rollen-Profilschienenführung ist derart ausgebildet, dass jede der Rollen rotationssymmetrisch bezüglich einer Längsachse der jeweiligen Rolle ausgebildet ist und jede Rolle mit Bezug auf die Längsachse der Rolle einen Durchmesser aufweist, welcher in Richtung der Längsachse der Rolle eine Variation aufweist, sodass der Durchmesser der Rolle in einem mittleren Bereich zwischen gegenüberliegenden Stirnflächen der Rolle einen Maximalwert aufweist und der Durchmesser - ausgehend von dem mittleren Bereich zwischen den gegenüberliegenden Stirnflächen - in Richtung der Längsachse der Rolle als Funktion eines Abstands vom mittleren Bereich eine mit dem Abstand vom mittleren Bereich stetig wachsende Reduktion aufweist. Ausserdem erstreckt sich der Trennsteg im ersten Abschnitt des Rollen-Umlaufkanals der Rollen-Umlenkungsvorrichtung parallel zur ersten Ebene derart, dass der Trennsteg mit Bezug auf die eine der Rollen-Laufbahnoberflächen des Grundkörpers, welche den ersten Abschnitt des Rollen-Umlaufkanals der Rollen-Umlenkungsvorrichtung begrenzt, eine Höhe aufweist, welche kleiner als der Maximalwert des Durchmessers der Rollen ist.

Auf diese Weise wird erreicht, dass der Trennsteg im Bereich der Lastzone des Rollen-Umlaufkanals an den Stirnflächen der Rollen der ersten Reihe von Rollen und an den Stirnflächen der Rollen der zweiten Reihe von Rollen jeweils über die gesamte Fläche der jeweiligen Stirnflächen anliegen kann, ohne dass der Trennsteg mit einer an der Profil-Führungsschiene ausgebildeten Rollen-Laufbahnoberfläche in Kontakt gerät.

Eine weitere Ausführungsform der linearen Rollen-Profilschienenführung ist derart ausgebildet, dass der Trennsteg sich im ersten Abschnitt des Rollen-Umlaufkanals der Rollen-Umlenkungsvorrichtung mit Bezug auf die eine der Rollen-Laufbahnoberflächen des Grundkörpers, welche den ersten Abschnitt des Rollen-Umlaufkanals der Rollen-Umlenkungsvorrichtung begrenzt, derart parallel zur ersten Ebene erstreckt, dass der Trennsteg einen von der einen der Rollen-Laufbahnoberflächen des Grundkörpers entfernten Endabschnitt aufweist. Hierbei weist der Trennsteg im entfernten Endabschnitt einen ersten Vorsprung auf, welcher sich senkrecht zur ersten Ebene derart erstreckt, dass der erste Vorsprung eine an die erste Seitenfläche des Trennstegs angrenzende Rolle der ersten Reihe von Rollen an einem an die erste Seitenfläche des Trennstegs angrenzenden Bereich einer Mantelfläche der Rolle überragt. Ausserdem weist der Trennsteg im entfernten Endabschnitt einen zweiten Vorsprung auf, welcher sich senkrecht zur ersten Ebene derart erstreckt, dass der zweite Vorsprung eine an die zweite Seitenfläche des Trennstegs angrenzende Rolle der zweiten Reihe von Rollen an einem an die zweite Seitenfläche des Trennstegs angrenzenden Bereich einer Mantelfläche der Rolle überragt.

Die Anordnung des ersten Vorsprungs im entfernten Endabschnitt des Trennstegs hat den Effekt, dass die in der Lastzone des Rollen-Umlaufkanals befindlichen Rollen der ersten Reihe von Rollen mittels des ersten Vorsprungs am Führungswagen gehalten werden können, wenn der Führungswagen von der Profil-Führungsschiene entfernt wird.

Entsprechend hat die Anordnung des zweiten Vorsprungs im entfernten Endabschnitt des Trennstegs den Effekt, dass die in der Lastzone des Rollen-Umlaufkanals befindlichen Rollen der zweiten Reihe von Rollen mittels des zweiten Vorsprungs am Führungswagen gehalten werden können, wenn der Führungswagen von der Profil-Führungsschiene entfernt wird.

Eine weitere Ausführungsform der linearen Rollen-Profilschienenführung ist derart ausgebildet, dass der Trennsteg an der ersten Seitenfläche des Trennstegs eine sich entlang der Rollen-Umlaufbahn (bzw. entlang des Rollen-Umlaufkanals) erstreckende erste Nut aufweist, durch welche erste Nut ein Schmiermittel zum Schmieren der Rollen der ersten Reihe von Rollen in den Rollen-Umlaufkanal einführbar ist, und/oder der Trennsteg an der zweiten Seitenfläche des Trennstegs eine sich entlang der Rollen-Umlaufbahn (bzw. entlang des Rollen-Umlaufkanals) erstreckende zweite Nut aufweist, durch welche zweite Nut ein Schmiermittel zum Schmieren der Rollen der zweiten Reihe von Rollen in den Rollen-Umlaufkanal einführbar ist.

Die erste Nut ermöglicht eine Verteilung von Schmiermittel (beispielsweise Schmieröl oder Fett) entlang des Rollen-Umlaufkanals zur Schmierung der ersten Reihe von Rollen. Entsprechend ermöglicht die zweite Nut eine Verteilung von Schmiermittel (beispielsweise Schmieröl oder Fett) entlang des Rollen-Umlaufkanals zur Schmierung der zweiten Reihe von Rollen.

Eine weitere Ausführungsform der linearen Rollen-Profilschienenführung ist derart ausgebildet, dass der Trennsteg aus einem Kunststoff gefertigt ist oder zumindest ein Abschnitt des Trennstegs aus einem Kunststoff gefertigt ist.

Als Kunststoff sind insbesondere Kunststoffe geeignet, welche eine hohe Steifigkeit und niedrige Reibwerte gewährleisten, beispielsweise Polyoxymethylene (auch POM oder Polyacetale genannt).

Alternativ kann vorgesehen sein, dass ein sich im ersten Abschnitt des Rollen-Umlaufkanals erstreckender Abschnitt des Trennstegs aus einem metallischen Werkstoff, beispielsweise Stahl, gefertigt ist.

### Kurze Beschreibung der Zeichnungen

Weitere Einzelheiten der Erfindung und insbesondere beispielhafte Ausführungsformen der erfindungsgemässen linearen Rollen-Profilschienenführung werden im Folgenden anhand der beigefügten Zeichnungen erläutert. Es zeigen:
- Fig. 1: eine perspektivische Ansicht einer erfindungsgemässen linearen Rollen-Profilschienenführung, mit einer Profil-Führungsschiene und einem an der Profil-Führungsschiene installierten Führungswagen;
- Fig. 2: die Rollen-Profilschienenführung gemäss Fig. 1, mit einer Darstellung der Profil-Führungsschiene und des Führungswagens, in einem Querschnitt senkrecht zur Längsrichtung der Profil-Führungsschiene, zur Darstellung von Teilbereichen von vier Rollen-Umlenkungsvorrichtungen UV1 bzw. UV2 für jeweils zwei nebeneinander angeordnete Reihen von Rollen;
- Fig. 3: die Rollen-Profilschienenführung wie in der Darstellung gemäss Fig. 2, jedoch ohne Darstellung der Führungsschiene;
- Fig. 4: eine Ansicht der Rollen-Profilschienenführung gemäss Fig. 1, in einem Längsschnitt durch eine der Linien IV-IV in Fig. 2, zur Darstellung eines Rollen-Umlaufkanals UK1 einer Rollen-Umlenkungsvorrichtung UV1 und eines Rollen-Umlaufkanals UK2 einer Rollen-Umlenkungsvorrichtung UV2;
- Fig. 5: eine perspektivische Ansicht der Rollen-Profilschienenführung gemäss Fig. 1 in einer Explosionsdarstellung;
- Fig. 6: eine räumliche Darstellung der Reihen von Rollen in dem Rollen-Umlaufkanal UK1 einer Rollen-Umlenkungsvorrichtung UV1 und in dem Rollen-Umlaufkanal UK2 einer Rollen-Umlenkungsvorrichtung UV2 gemäss Fig. 2-4;
- Fig. 7: einen Abschnitt des Führungswagens in einem Querschnitt gemäss Fig. 3, im Vergleich zu Fig. 3 vergrössert dargestellt;
- Fig. 8: einen Abschnitt des Führungswagens in einem Querschnitt gemäss Fig. 7, im Vergleich zu Fig. 7 vergrössert dargestellt;
- Fig. 9: eine Rolle aus einer der Rollen-Umlenkungsvorrichtungen UV1 bzw. UV2 gemäss Fig. 2-4, in einer Draufsicht auf die Mantelfläche der Rolle.

### Beschreibung von Ausführungsformen

Für dieselben Elemente in den Figuren sind jeweils dieselben Bezugszeichen verwendet, wenn nichts anderes erwähnt ist.

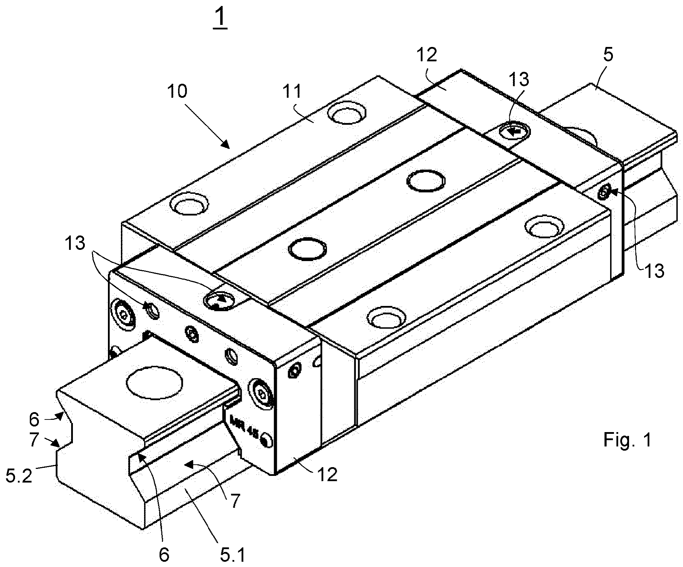

Fig. 1 zeigt eine perspektivische Ansicht einer erfindungsgemässen linearen Rollen-Profilschienenführung 1 mit einer Profil-Führungsschiene 5 und einem an der Profil-Führungsschiene 5 installierten Führungswagen 10.

Die Profil-Führungsschiene 5 weist im vorliegenden Beispiel vier ebene, sich in einer Längsrichtung der Profil-Führungsschiene 5 erstreckende Rollen-Laufbahnoberflächen 6, 7 auf, welche räumlich verteilt auf gegenüberliegenden Seitenflächen 5.1 bzw. 5.2 der Profil-Führungsschiene 5 ausgebildet sind: Wie aus Fig. 1 ersichtlich, sind auf jeder der Seitenflächen 5.1 bzw. 5.2 der Profil-Führungsschiene 5 je eine Rollen-Laufbahnoberfläche 6 und eine Rollen-Laufbahnoberfläche 7 ausgebildet, wobei auf jeder der Seitenflächen 5.1 bzw. 5.2 die jeweilige Laufbahnoberfläche 6 neben der jeweiligen Rollen-Laufbahnoberfläche 7 angeordnet ist und sich mit Bezug auf die Längsrichtung der Profil-Führungsschiene 5 parallel zu dieser Rollen-Laufbahnoberfläche 7 erstreckt.

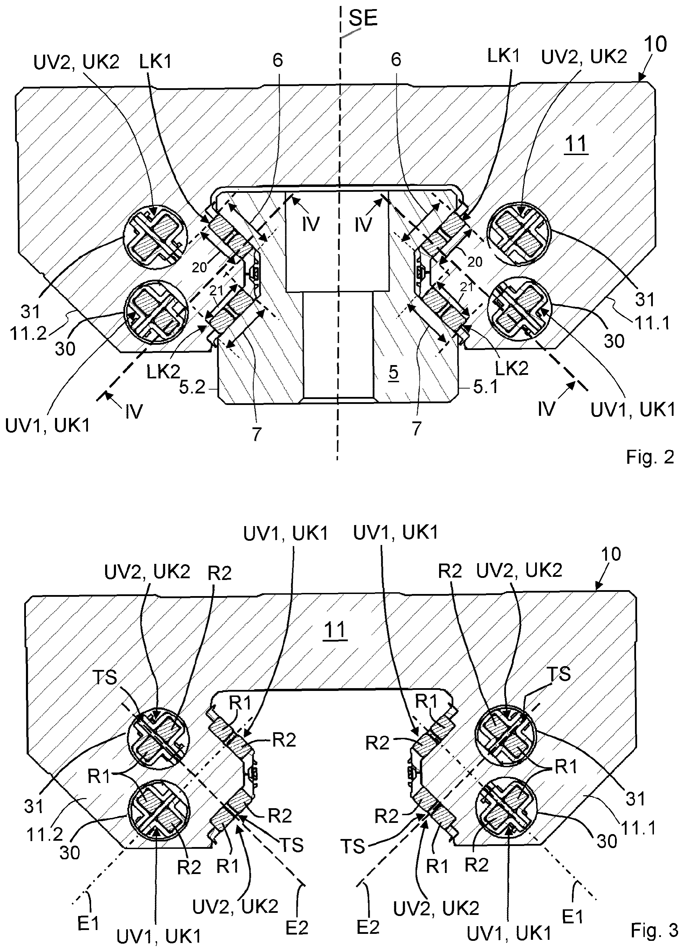

Mit Bezug auf einen Querschnitt senkrecht zur Profil-Führungsschiene 5 sind die auf der Seitenfläche 5.1 ausgebildeten Rollen-Laufbahnoberfläche 6 und 7 relativ zueinander derart angerordnet, dass sich die Rollen-Laufbahnoberfläche 6 in dem Querschnitt senkrecht zur Profil-Führungsschiene 5 senkrecht zur Rollen-Laufbahnoberfläche 7 erstreckt (wie aus Fig. 1 in Kombination mit Fig. 2 ersichtlich).

Entsprechend sind die auf der Seitenfläche 5.2 ausgebildeten Rollen-Laufbahnoberfläche 6 und 7 relativ zueinander derart angerordnet, dass sich die Rollen-Laufbahnoberfläche 6 in dem Querschnitt senkrecht zur Profil-Führungsschiene 5 senkrecht zur Rollen-Laufbahnoberfläche 7 erstreckt (wie aus Fig. 1 in Kombination mit Fig. 2 ersichtlich).

Der Führungswagen 10 ist an der Profil-Führungsschiene 5 derart installiert, dass er in der Längsrichtung der Profil-Führungsschiene 5 linear beweglich angeordnet ist. Wie aus Fig. 1 ersichtlich, umfasst der Führungswagen 10 u.a. einen Grundkörper 11 und zwei Endkappen 12, welche am Grundkörper 11 - mit Bezug auf die Längsrichtung der Profil-Führungsschiene 5 - jeweils an gegenüberliegenden Stirnflächen des Grundkörpers 11 befestigt sind.

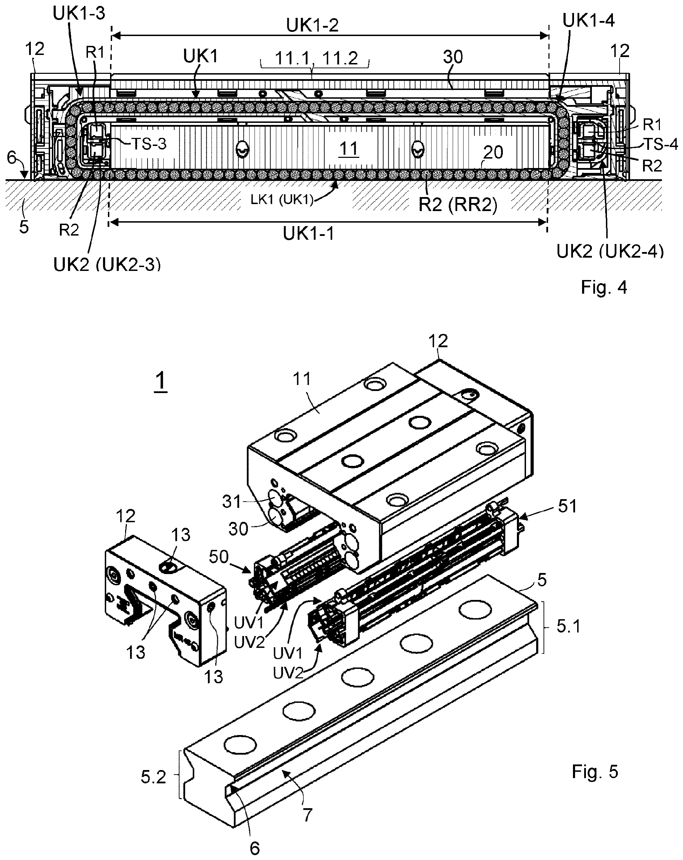

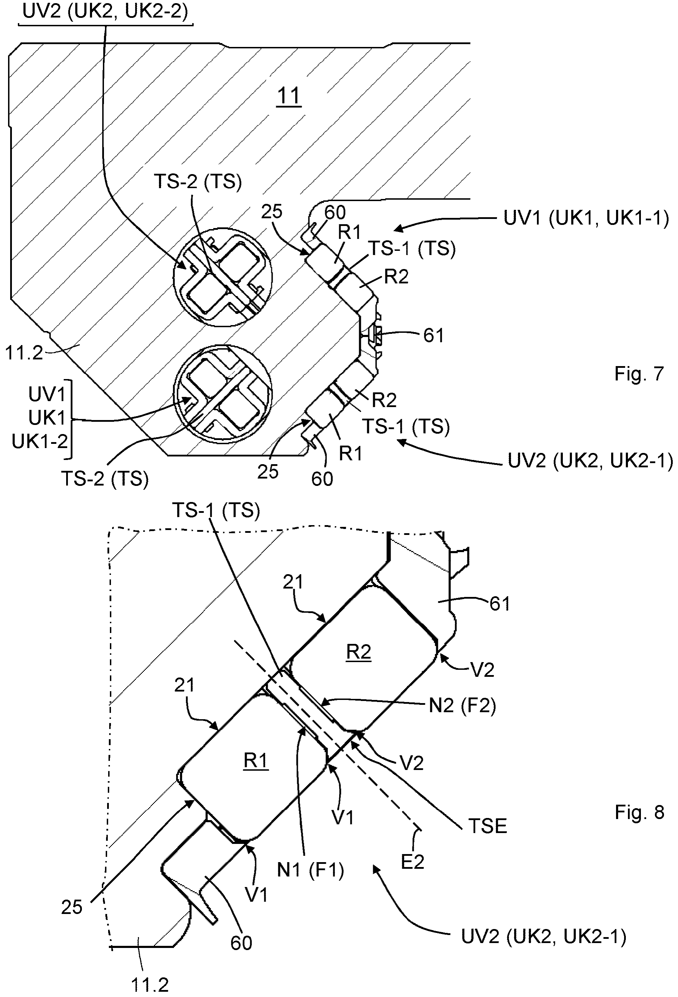

Wie aus Fig. 1 und 5 ersichtlich, weisen die Endkappen 12 jeweils mehrere Einlassöffnungen 13 auf, welche dazu dienen, Schmiermittel zur Schmierung von Rollen der Rollen-Profilschienenführung 1 zuzuführen. Ein durch die Einlassöffnungen 13 zugeführtes Schmiermittel kann im Innern des Führungswagens 10 von den Endkappen 12 aus zu den Rollen der Rollen-Profilschienenführung 1 weitergeleitet werden, was im Folgenden im Zusammenhang mit Fig. 8 noch detaillierter erläutert wird.

Weitere Einzelheiten der Rollen-Profilschienenführung 1 werden im Folgenden mit Bezug auf die Figuren 2-9 erläutert.

Wie aus Fig. 2 und 3 ersichtlich, weist der Grundkörper 11 des Führungswagens 10 in einem Querschnitt senkrecht zur Längsrichtung der Profil-Führungsschiene 5 ein U-förmiges Profil mit zwei seitlichen Schenkeln 11.1 und 11.2 auf.

Das Querschnittsprofil des Grundkörpers 11 ist derart geformt, dass - wenn der Führungswagen 10 der Profil-Führungsschiene 5 gemäss der Darstellung in Fig. 1 installiert ist - ein oberer Abschnitt der Profil-Führungsschiene 5, welcher insbesondere sowohl die auf der Seitenfläche 5.1 der Profil-Führungsschiene 5 ausgebildeten Rollen-Laufbahnoberflächen 6 und 7 als auch die auf Seitenfläche 5.2 der Profil-Führungsschiene 5 ausgebildeten Rollen-Laufbahnoberfläche 6 und 7 umfasst, in dem Zwischenraum angeordnet ist, welcher sich zwischen den seitlichen Schenkeln 11.1 und 11.2 des U-förmigen Profils des Grundkörpers 11 erstreckt.

Das Querschnittsprofil des Grundkörpers 11 ist dabei derart geformt, dass zwischen dem seitlichen Schenkel 11.1 des Grundkörpers 11 und der Seitenfläche 5.1 der Profil-Führungsschiene 5 ein erster Spalt ausgebildet ist, welcher sich in der Längsrichtung der Profil-Führungsschiene 5 erstreckt. Entsprechend ist zwischen dem seitlichen Schenkel 11.2 des Grundkörpers 11 und der Seitenfläche 5.2 der Profil-Führungsschiene 5 ein zweiter Spalt ausgebildet, welcher sich in der Längsrichtung der Profil-Führungsschiene 5 erstreckt.

Der vorstehend genannte erste Spalt zwischen dem seitlichen Schenkel 11.1 des Grundkörpers 11 und der Seitenfläche 5.1 der Profil-Führungsschiene 5 und der vorstehend genannte zweite Spalt zwischen dem seitlichen Schenkel 11.2 des Grundkörpers 11 und der Seitenfläche 5.2 der Profil-Führungsschiene 5 dienen dazu, diejenigen Rollen der Rollen-Profilschienenführung 1 aufzunehmen, mit denen der Führungswagen 10 auf den Rollen-Laufbahnoberflächen 6 und 7 der Profil-Führungsschiene 5 gelagert werden soll, um eine Bewegung des Führungswagens 10 in der Längsrichtung der Profil-Führungsschiene 5 zu ermöglichen.

Wie Fig. 2 andeutet, ist die Rollen-Profilschienenführung 1 derart konstruiert, dass der Führungswagen 10 und die Profil-Führungsschiene 5 symmetrisch zu einer in der Fig. 2 dargestellten Symmetrieebene SE ausgebildet ist (die Symmetrieebene SE erstreckt sich entlang der in der Fig. 2 dargestellten, mit dem Bezugsweichen SE bezeichneten gestrichelten Linie in der Längsrichtung der Profil-Führungsschiene 5).

Wie in Fig. 2 dargestellt, sind am seitlichen Schenkel 11.1 des Grundkörpers 11 (auf der der Seitenfläche 5.1 der Profil-Führungsschiene 5 gegenüberliegenden Seite des seitlichen Schenkels 11.1) zwei ebene, sich in der Längsrichtung der Profil-Führungsschiene erstreckende Rollen-Laufbahnoberflächen 20 und 21 ausgebildet.

Mit Bezug auf einen Querschnitt senkrecht zur Profil-Führungsschiene 5 sind die am seitlichen Schenkel 11.1 des Grundkörpers 11 ausgebildeten Rollen-Laufbahnoberflächen 20 und 21 derart nebeneinander angeordnet, dass sich die Rollen-Laufbahnoberfläche 20 in dem Querschnitt senkrecht zur Profil-Führungsschiene 5 senkrecht zur Rollen-Laufbahnoberfläche 21 erstreckt.

Wie in Fig. 2 ausserdem dargestellt, sind am seitlichen Schenkel 11.2 des Grundkörpers 11 (auf der der Seitenfläche 5.2 der Profil-Führungsschiene 5 gegenüberliegenden Seite des seitlichen Schenkels 11.2) zwei ebene, sich in der Längsrichtung der Profil-Führungsschiene erstreckende Rollen-Laufbahnoberflächen 20 und 21 ausgebildet.

Mit Bezug auf einen Querschnitt senkrecht zur Profil-Führungsschiene 5 sind die am seitlichen Schenkel 11.2 des Grundkörpers 11 ausgebildeten Rollen-Laufbahnoberflächen 20 und 21 derart nebeneinander angeordnet, dass sich die Rollen-Laufbahnoberfläche 20 in dem Querschnitt senkrecht zur Profil-Führungsschiene 5 senkrecht zur Rollen-Laufbahnoberfläche 21 erstreckt.

Wie in Fig. 2 dargestellt, sind die am seitlichen Schenkel 11.1 des Grundkörpers 11 ausgebildeten Rollen-Laufbahnoberflächen 20 und 21 und die auf der Seitenfläche 5.1 der Profil-Führungsschiene 5 ausgebildeten Rollen-Laufbahnoberflächen 6 und 7 relativ zueinander derart angeordnet, dass
- die auf der Seitenfläche 5.1 der Profil-Führungsschiene 5 ausgebildete Rollen-Laufbahnoberfläche 6 und die am seitlichen Schenkel 11.1 des Grundkörpers 11 ausgebildete Rollen-Laufbahnoberfläche 20 sich parallel zueinander erstrecken und gegenüberliegend in einem Abstand zueinander derart angeordnet sind, dass die auf der Seitenfläche 5.1 der Profil-Führungsschiene 5 ausgebildete Rollen-Laufbahnoberfläche 6 und die am seitlichen Schenkel 11.1 des Grundkörpers 11 ausgebildete Rollen-Laufbahnoberfläche 20 einen lasttragenden Rollen-Durchgangskanal LK1 begrenzen; und
- die auf der Seitenfläche 5.1 der Profil-Führungsschiene 5 ausgebildete Rollen-Laufbahnoberfläche 7 und die am seitlichen Schenkel 11.1 des Grundkörpers 11 ausgebildete Rollen-Laufbahnoberfläche 21 sich parallel zueinander erstrecken und gegenüberliegend in einem Abstand zueinander derart angeordnet sind, dass die auf der Seitenfläche 5.1 der Profil-Führungsschiene 5 ausgebildete Rollen-Laufbahnoberfläche 7 und die am seitlichen Schenkel 11.1 des Grundkörpers 11 ausgebildete Rollen-Laufbahnoberfläche 21 einen lasttragenden Rollen-Durchgangskanal LK2 begrenzen.

Wie in Fig. 2 dargestellt, sind die am seitlichen Schenkel 11.2 des Grundkörpers 11 ausgebildeten Rollen-Laufbahnoberflächen 20 und 21 und die auf der Seitenfläche 5.2 der Profil-Führungsschiene 5 ausgebildeten Rollen-Laufbahnoberflächen 6 und 7 relativ zueinander derart angeordnet, dass
- die auf der Seitenfläche 5.2 der Profil-Führungsschiene 5 ausgebildete Rollen-Laufbahnoberfläche 6 und die die am seitlichen Schenkel 11.2 des Grundkörpers 11 ausgebildete Rollen-Laufbahnoberfläche 20 sich parallel zueinander erstrecken und gegenüberliegend in einem Abstand zueinander derart angeordnet sind, dass die auf der Seitenfläche 5.2 der Profil-Führungsschiene 5 ausgebildete Rollen-Laufbahnoberfläche 6 und die am seitlichen Schenkel 11.2 des Grundkörpers 11 ausgebildete Rollen-Laufbahnoberfläche 20 einen lasttragenden Rollen-Durchgangskanal LK1 begrenzen; und
- die auf der Seitenfläche 5.2 der Profil-Führungsschiene 5 ausgebildete Rollen-Laufbahnoberfläche 7 und die die am seitlichen Schenkel 11.2 des Grundkörpers 11 ausgebildete Rollen-Laufbahnoberfläche 21 sich parallel zueinander erstrecken und gegenüberliegend in einem Abstand zueinander derart angeordnet sind, dass die auf der Seitenfläche 5.2 der Profil-Führungsschiene 5 ausgebildete Rollen-Laufbahnoberfläche 7 und die am seitlichen Schenkel 11.2 des Grundkörpers 11 ausgebildete Rollen-Laufbahnoberfläche 21 einen lasttragenden Rollen-Durchgangskanal LK2 begrenzen.

Wie in Fig. 2 ausserdem dargestellt, sind im seitlichen Schenkel 11.1 des Grundkörpers 11 zwei Durchgangsbohrungen 30 und 31 ausgebildet, welche nebeneinander angeordnet sind und sich jeweils in der Längsrichtung der Profil-Führungsschiene 5 erstrecken.

Entsprechend sind im seitlichen Schenkel 11.2 des Grundkörpers 11 ebenfalls zwei Durchgangsbohrungen 30 und 31 ausgebildet, welche nebeneinander angeordnet sind und sich jeweils in der Längsrichtung der Profil-Führungsschiene 5 erstrecken.

Wie Fig. 2 - 4 andeuten, weist der Führungswagen 10 - zu jedem der beiden vorstehend genannten lasttragenden Rollen-Durchgangskanäle LK1 - jeweils eine dem jeweiligen einzelnen der lasttragenden Rollen-Durchgangskanäle LK1 zugeordnete, vollrollig ausgebildete Rollen-Umlenkungsvorrichtung UV1 für jeweils zwei nebeneinander angeordnete Reihen RR1 und RR2 von Rollen auf, welche Rollen-Umlenkungsvorrichtung UV1 am Grundkörper 11 befestigt ist und einen sich ringförmig erstreckenden Rollen-Umlaufkanal UK1 umfasst, welcher Rollen-Umlaufkanal UK1 eine ringförmig geschlossene Rollen-Umlaufbahn für die nebeneinander angeordneten Reihen RR1 und RR2 von Rollen definiert. In den Darstellungen gemäss Fig. 2-4 werden im Umlaufkanal UK1 der Rollen-Umlenkungsvorrichtung UV1 angeordnete Rollen, welche zur Reihe RR1 von Rollen gehören, jeweils mit dem Bezugszeichen R1 bezeichnet; hingegen werden Rollen, welche zur Reihe RR2 von Rollen gehören, jeweils mit dem Bezugszeichen R2 bezeichnet.

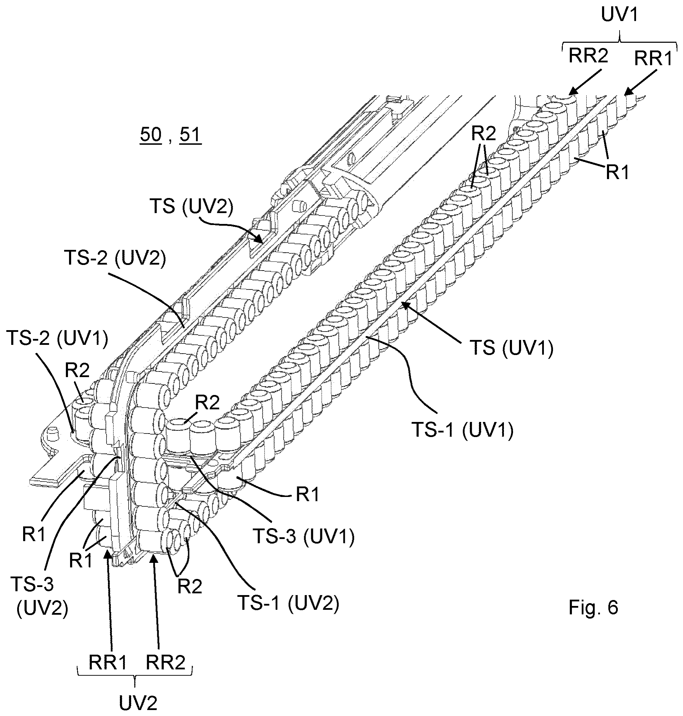

Die Rollen-Umlenkungsvorrichtung UV1 ist derart "vollrollig" ausgebildet, dass jeweils zwei aufeinanderfolgende Rollen R1 der Reihe RR1 von Rollen nicht mittels technischen Mitteln relativ zueinander auf Distanz gehalten sind, sondern dass die Rollen R1 stattdessen im Rollen-Umlaufkanal UK1 derart zirkulieren können, dass unmittelbar aufeinanderfolgende Rollen R1 sich an ihren Mantelflächen berühren können (wie aus Fig. 4 und 6 ersichtlich). Entsprechend sind jeweils zwei aufeinanderfolgende Rollen R2 der Reihe RR2 von Rollen nicht mittels technischen Mitteln relativ zueinander auf Distanz gehalten; stattdessen können die Rollen R2 im Rollen-Umlaufkanal UK1 derart zirkulieren, dass unmittelbar aufeinanderfolgende Rollen R2 sich an ihren Mantelflächen berühren können (wie aus Fig. 4 und 6 ersichtlich).

Wie Fig. 2 - 4 ausserdem andeuten, weist der Führungswagen 10 - zu jedem der beiden vorstehend genannten lasttragenden Rollen-Durchgangskanäle LK2 - jeweils eine dem jeweiligen einzelnen der lasttragenden Rollen-Durchgangskanäle LK2 zugeordnete, vollrollig ausgebildete Rollen-Umlenkungsvorrichtung UV2 für jeweils zwei nebeneinander angeordnete Reihen RR1 und RR2 von Rollen auf, welche Rollen-Umlenkungsvorrichtung UV2 am Grundkörper 11 befestigt ist und einen sich ringförmig erstreckenden Rollen-Umlaufkanal UK2 umfasst, welcher Rollen-Umlaufkanal UK2 eine ringförmig geschlossene Rollen-Umlaufbahn für die nebeneinander angeordneten Reihen RR1 und RR2 von Rollen definiert. In den Darstellungen gemäss Fig. 2-4 werden die im Umlaufkanal UK2 der Rollen-Umlenkungsvorrichtung UV2 angeordneten Rollen, welche zur Reihe RR1 von Rollen gehören, jeweils mit dem Bezugszeichen R1 bezeichnet; hingegen werden Rollen, welche zur Reihe RR2 von Rollen gehören, jeweils mit dem Bezugszeichen R2 bezeichnet.

Die Rollen-Umlenkungsvorrichtung UV2 ist derart "vollrollig" ausgebildet, dass jeweils zwei aufeinanderfolgende Rollen R1 der Reihe RR1 von Rollen nicht mittels technischen Mitteln relativ zueinander auf Distanz gehalten sind, sondern dass die Rollen R1 stattdessen im Rollen-Umlaufkanal UK2 derart zirkulieren können, dass unmittelbar aufeinanderfolgende Rollen R1 sich an ihren Mantelflächen berühren können (wie aus Fig. 6 ersichtlich). Entsprechend sind jeweils zwei aufeinanderfolgende Rollen R2 der Reihe RR2 von Rollen nicht mittels technischen Mitteln relativ zueinander auf Distanz gehalten; stattdessen können die Rollen R2 im Rollen-Umlaufkanal UK2 derart zirkulieren, dass unmittelbar aufeinanderfolgende Rollen R2 sich an ihren Mantelflächen berühren können (wie aus Fig. 6 ersichtlich).

Wie Fig. 2 - 4 andeuten, umfasst der Rollen-Umlaufkanal UK1 der jeweiligen Rollen-Umlenkungsvorrichtung UV1:
- einen ersten Abschnitt UK1-1 des Rollen-Umlaufkanals UK1, welcher mit dem jeweiligen einzelnen der lasttragenden Rollen-Durchgangskanäle LK1 identisch ist,
- einen zweiten Abschnitt UK1-2 des Rollen-Umlaufkanals UK1, welcher sich in einem Abstand zum ersten Abschnitt UK1-1 des Rollen-Umlaufkanals UK1 in der Längsrichtung der Profil-Führungsschiene 5 durch eine der Durchgangsbohrungen 30 im Grundkörper 11 erstreckt,
- einen dritten Abschnitt UK1-3 und einen vierten Abschnitt UK1-4 des Rollen-Umlaufkanals UK1, wobei der dritte Abschnitt UK1-3 des Rollen-Umlaufkanals UK1 eines von zwei gegenüberliegenden Enden des ersten Abschnitts

UK1-1 des Rollen-Umlaufkanals UK1 mit einem von zwei gegenüberliegenden Enden des zweiten Abschnitts UK1-2 des Rollen-Umlaufkanals UK1 verbindet und der vierte Abschnitt UK1-4 des Rollen-Umlaufkanals das andere der zwei gegenüberliegenden Enden des ersten Abschnitts UK1-1 des Rollen-Umlaufkanals UK1 mit einem anderen der zwei gegenüberliegenden Enden des zweiten Abschnitts UK1-2 des Rollen-Umlaufkanals UK1 verbindet.

Wie Fig. 2 - 4 andeuten, umfasst der Rollen-Umlaufkanal UK2 der jeweiligen Rollen-Umlenkungsvorrichtung UV2:
- einen ersten Abschnitt UK2-1 des Rollen-Umlaufkanals UK2, welcher mit dem jeweiligen einzelnen der lasttragenden Rollen-Durchgangskanäle LK2 identisch ist,
- einen zweiten Abschnitt UK2-2 des Rollen-Umlaufkanals UK2, welcher sich in einem Abstand zum ersten Abschnitt UK2-1 des Rollen-Umlaufkanals UK2 in der Längsrichtung der Profil-Führungsschiene 5 durch eine der Durchgangsbohrungen 31 im Grundkörper 11 erstreckt,
- einen dritten Abschnitt UK2-3 und einen vierten Abschnitt UK2-4 des Rollen-Umlaufkanals UK2, wobei der dritte Abschnitt UK2-2 des Rollen-Umlaufkanals UK2 eines von zwei gegenüberliegenden Enden des ersten Abschnitts UK2-1 des Rollen-Umlaufkanals UK2 mit einem von zwei gegenüberliegenden Enden des zweiten Abschnitts UK2-2 des Rollen-Umlaufkanals UK2 verbindet und der vierte Abschnitt UK1-4 des Rollen-Umlaufkanals UK2 das andere der zwei gegenüberliegenden Enden des ersten Abschnitts UK2-1 des Rollen-Umlaufkanals UK2 mit einem anderen der zwei gegenüberliegenden Enden des zweiten Abschnitts UK2-2 des Rollen-Umlaufkanals UK2 verbindet.

Wie Fig. 2 - 4 andeuten, umfasst jede der vorstehend genannten (einem der lasttragenden Rollen-Durchgangskanäle LK1 zugeordneten) Rollen-Umlenkungsvorrichtungen UV1 zumindest eine erste Reihe RR1 von Rollen und eine zweite Reihe RR2 von Rollen, wobei die erste Reihe RR1 von Rollen eine Mehrzahl hintereinander angeordneter Rollen R1 und die zweite Reihe RR2 von Rollen jeweils eine Mehrzahl hintereinander angeordneter Rollen R2 aufweisen und die erste Reihe RR1 von Rollen und die zweite Reihe RR2 von Rollen im Rollen-Umlaufkanal UK1 der Rollen-Umlenkungsvorrichtung UV1 nebeneinander derart angeordnet sind, dass bei einer Bewegung des Führungswagens 10 in der Längsrichtung der Profil-Führungsschiene 5 die Rollen R1 der ersten Reihe RR1 von Rollen und die Rollen R2 der zweiten Reihe RR2 von Rollen nebeneinander entlang der ringförmig geschlossenen Rollen-Umlaufbahn durch den Rollen-Umlaufkanal UK1 jeweils parallel zu einer vorgegebenen (in Fig. 3 dargestellten) ersten Ebene E1 zirkulieren.

Wie Fig. 2 - 4 andeuten, umfasst jede der vorstehend genannten (einem der lasttragenden Rollen-Durchgangskanäle LK2 zugeordneten) Rollen-Umlenkungsvorrichtungen UV2 zumindest eine erste Reihe RR1 von Rollen und eine zweite Reihe RR2 von Rollen, wobei die erste Reihe RR1 von Rollen eine Mehrzahl hintereinander angeordneter Rollen R1 und die zweite Reihe RR2 von Rollen jeweils eine Mehrzahl hintereinander angeordneter Rollen R2 aufweisen und die erste Reihe RR1 von Rollen und die zweite Reihe RR2 von Rollen im Rollen-Umlaufkanal UK2 der Rollen-Umlenkungsvorrichtung UV2 nebeneinander derart angeordnet sind, dass bei einer Bewegung des Führungswagens 10 in der Längsrichtung der Profil-Führungsschiene 5 die Rollen R1 der ersten Reihe RR1 von Rollen und die Rollen R2 der zweiten Reihe RR2 von Rollen nebeneinander entlang der ringförmig geschlossenen Rollen-Umlaufbahn durch den Rollen-Umlaufkanal UK2 jeweils parallel zu einer vorgegebenen (in Fig. 3 dargestellten) ersten Ebene E2 zirkulieren.

Wie Fig. 2-4 andeuten, sind die Rollen-Umlenkungsvorrichtung UV1 und Rollen-Umlenkungsvorrichtung UV2 jeweils aus einer Reihe von Einzelteilen zusammengesetzt. Beispielsweise erstrecken sich Abschnitte einer am seitlichen Schenkel 11.1 oder am seitlichen Schenkel 11.2 des Grundkörpers 11 ausgebildeten Rollen-Umlenkungsvorrichtung UV1 durch die Durchgangsbohrung 30 im seitlichen Schenkel 11.1 bzw. im seitlichen Schenkel 11.2 des Grundkörpers 11, andere Abschnitte einer am seitlichen Schenkel 11.1 oder am seitlichen Schenkel 11.2 des Grundkörpers 11 ausgebildeten Rollen-Umlenkungsvorrichtung UV1 erstrecken sich hingegen am seitlichen Schenkel 11.1 oder am seitlichen Schenkel 11.2 jeweils entlang der Rollen-Laufbahnoberfläche 20. Beispielsweise erstrecken sich Abschnitte einer am seitlichen Schenkel 11.1 oder am seitlichen Schenkel 11.2 des Grundkörpers 11 ausgebildeten Rollen-Umlenkungsvorrichtung UV2 durch die Durchgangsbohrung 31 im seitlichen Schenkel 11.1 bzw. im seitlichen Schenkel 11.2 des Grundkörpers 11, andere Abschnitte einer am seitlichen Schenkel 11.1 oder am seitlichen Schenkel 11.2 des Grundkörpers 11 ausgebildeten Rollen-Umlenkungsvorrichtung UV2 erstrecken sich hingegen am seitlichen Schenkel 11.1 oder am seitlichen Schenkel 11.2 jeweils entlang der Rollen-Laufbahnoberfläche 21.

Zur Verdeutlichung der räumlichen Erstreckung der am Führungswagen 10 angeordneten Rollen-Umlenkungsvorrichtungen UV1 und UV2 sei auf Fig. 5 verwiesen. Fig. 5 zeigt die Rollen-Profilschienenführung 1 in einer Explosions-Darstellung. Die Darstellung gemäss Fig. 5 zeigt eine Baugruppe 50, welche alle Teile der am seitlichen Schenkel 11.2 anzuordnenden Rollen-Umlenkungsvorrichtung UV1 und alle Teile der am seitlichen Schenkel 11.2 anzuordnenden Rollen-Umlenkungsvorrichtung UV2 (losgelöst vom Schenkel 11.2) umfasst. Die Darstellung gemäss Fig. 5 zeigt ausserdem eine Baugruppe 51, welche alle Teile der am seitlichen Schenkel 11.1 anzuordnenden Rollen-Umlenkungsvorrichtung UV1 und alle Teile der am seitlichen Schenkel 11.1 anzuordnenden Rollen-Umlenkungsvorrichtung UV2 (losgelöst vom Schenkel 11.1) umfasst.

Zur Verdeutlichung der Anordnung der erste Reihe RR1 von Rollen und der zweiten Reihe RR2 von Rollen in den Rollen-Umlenkungsvorrichtungen UV1 und UV2 dient die Fig. 6. Die Fig. 6 zeigt eine Darstellung der Baugruppe 50 bzw. der Baugruppe 51 gemäss Fig. 5 derart, dass bestimmte Teile, welche eine äussere Wand des Rollen-Umlaufkanals UK1 bzw. eine äussere Wand des Rollen-Umlaufkanals UK2 bilden, in der Fig. 6 nicht dargestellt sind, sodass in der Fig. 6 die Anordnung der Rollen R1 der erste Reihe RR1 von Rollen und der Rollen R2 der zweiten Reihe RR2 von Rollen in einer dreidimensionalen Darstellung sichtbar wird.

Wie aus Fig. 4, 5, 6-8 ersichtlich, weist die dem jeweiligen einzelnen der lasttragenden Rollen-Durchgangskanäle LK1 zugeordnete Rollen-Umlenkungsvorrichtung UV1 einen Trennsteg TS auf, welcher sich im Rollen-Umlaufkanal UK1 jeweils parallel zur ersten Ebene E1 durch den ersten Abschnitt UK1-1, den zweiten Abschnitt UK1-2, den dritten Abschnitt UK1-3 und den vierten Abschnitt UK1-4 des Rollen-Umlaufkanals UK1 erstreckt und zwischen der ersten Reihe RR1 von Rollen und der zweiten Reihe RR2 von Rollen derart angeordnet ist, dass der Trennsteg TS die Rollen R1 der ersten Reihe RR1 von Rollen von den Rollen R2 der zweiten Reihe RR2 von Rollen räumlich separiert.

Die Rollen-Umlenkungsvorrichtung UV1 ist derart am Grundkörper 11 befestigt, dass der Trennsteg TS der Rollen-Umlenkungsvorrichtung UV1 ortsfest relativ zum Grundkörper 11 angeordnet ist (wie aus Fig. 4-6 ersichtlich).

Entsprechend weist die dem jeweiligen einzelnen der lasttragenden Rollen-Durchgangskanäle LK2 zugeordnete Rollen-Umlenkungsvorrichtung UV2 einen Trennsteg TS auf, welcher sich im Rollen-Umlaufkanal UK2 jeweils parallel zur ersten Ebene E2 durch den ersten Abschnitt UK2-1, den zweiten Abschnitt UK2-2, den dritten Abschnitt UK2-3 und den vierten Abschnitt UK2-4 des Rollen-Umlaufkanals UK2 erstreckt und zwischen der ersten Reihe RR1 von Rollen und der zweiten Reihe RR2 von Rollen derart angeordnet ist, dass der Trennsteg TS die Rollen R1 der ersten Reihe RR1 von Rollen von den Rollen R2 der zweiten Reihe RR2 von Rollen räumlich separiert.

Die Rollen-Umlenkungsvorrichtung UV2 ist derart am Grundkörper 11 befestigt, dass der Trennsteg TS der Rollen-Umlenkungsvorrichtung UV2 ortsfest relativ zum Grundkörper 11 angeordnet ist (wie aus Fig. 4-6 ersichtlich).

Der Trennsteg TS der Rollen-Umlenkungsvorrichtung UV1 ist im vorliegenden Beispiel im Rollen-Umlaufkanal UK1 der Rollen-Umlenkungsvorrichtung UV1 vorzugsweise derart angeordnet, dass sich der Trennsteg TS lückenlos über die gesamte Länge des Rollen-Umlaufkanals UK1 entlang der ringförmig geschlossenen Rollen-Umlaufbahn für die nebeneinander angeordneten Reihen RR1 bzw. RR2 von Rollen R1 bzw. R2 erstreckt.

Der Trennsteg TS der Rollen-Umlenkungsvorrichtung UV2 ist im vorliegenden Beispiel im Rollen-Umlaufkanal UK2 der Rollen-Umlenkungsvorrichtung UV2 vorzugsweise derart angeordnet, dass sich der Trennsteg TS lückenlos über die gesamte Länge des Rollen-Umlaufkanals UK2 entlang der ringförmig geschlossenen Rollen-Umlaufbahn für die nebeneinander angeordneten Reihen RR1 bzw. RR2 von Rollen R1 bzw. R2 erstreckt.

Wie aus Fig. 4 und 6 ersichtlich, kann der Trennsteg TS der Rollen-Umlenkungsvorrichtung UV1 aus mehreren Abschnitten zusammengesetzt sein: Der Trennsteg TS der Rollen-Umlenkungsvorrichtung UV1 kann beispielsweise Abschnitte TS-1, TS-2, TS-3, TS-4 aufweisen, wobei: der Abschnitt TS-1 des Trennstegs TS sich mindestens über einen Teil der Länge des ersten Abschnitts UK1-1 des Rollen-Umlaufkanals UK1 erstreckt; der Abschnitt TS-2 des Trennstegs TS sich mindestens über einen Teil der Länge des zweiten Abschnitts UK1-2 des Rollen-Umlaufkanals UK1 erstreckt; der Abschnitt TS-3 des Trennstegs TS sich mindestens über einen Teil der Länge des dritten Abschnitts UK1-3 des Rollen-Umlaufkanals UK1 erstreckt; und/oder der Abschnitt TS-4 des Trennstegs TS sich mindestens über einen Teil der Länge des vierten Abschnitts UK1-4 des Rollen-Umlaufkanals UK1 erstreckt.

Entsprechend kann der Trennsteg TS der Rollen-Umlenkungsvorrichtung UV2 aus mehreren Abschnitten zusammengesetzt sein: Der Trennsteg TS der Rollen-Umlenkungsvorrichtung UV2 kann beispielsweise Abschnitte TS-1, TS-2, TS-3, TS-4 aufweisen, wobei: der Abschnitt TS-1 des Trennstegs TS sich mindestens über einen Teil der Länge des ersten Abschnitts UK2-1 des Rollen-Umlaufkanals UK2 erstreckt; der Abschnitt TS-2 des Trennstegs TS sich mindestens über einen Teil der Länge des zweiten Abschnitts UK2-2 des Rollen-Umlaufkanals UK2 erstreckt; der Abschnitt TS-3 des Trennstegs TS sich mindestens über einen Teil der Länge des dritten Abschnitts UK2-3 des Rollen-Umlaufkanals UK2 erstreckt; und/oder der Abschnitt TS-4 des Trennstegs TS sich mindestens über einen Teil der Länge des vierten Abschnitts UK2-4 des Rollen-Umlaufkanals UK2 erstreckt.

Aus Fig. 4, 5, 6-8 ist ausserdem ersichtlich, dass jede Rolle R1 der ersten Reihe RR1 von Rollen mit einer Stirnfläche der jeweiligen Rolle R1 an eine erste Seitenfläche F1 des Trennstegs TS angrenzt, sodass jede Rolle R1 der ersten Reihe RR1 von Rollen bei einer Bewegung des Führungswagens 10 in der Längsrichtung der Profil-Führungsschiene 5 an der ersten Seitenfläche F1 des Trennstegs TS anliegt.

Fig. 4, 5, 6-8 deuten ausserdem an, dass jede Rolle R2 der zweiten Reihe RR2 von Rollen mit einer Stirnfläche der jeweiligen Rolle an eine zweite Seitenfläche F2 des Trennstegs TS angrenzt, sodass jede Rolle der zweiten Reihe R2 von Rollen bei einer Bewegung des Führungswagens 10 in der Längsrichtung der Profil-Führungsschiene 5 an der zweiten Seitenfläche F2 des Trennstegs TS geführt ist.

Wie aus Fig. 3, 7 und 8 ersichtlich, ist der Führungswagen 10 im vorliegenden Beispiel derart ausgebildet, dass der Grundkörper 11 einen ersten Oberflächenbereich 25 aufweist, welcher sich entlang des ersten Abschnitts UK1-1 des Rollen-Umlaufkanals UK1 jeweils parallel zur ersten Ebene E1 derart erstreckt, dass Rollen R1 der ersten Reihe RR1 von Rollen im ersten Abschnitt UK1-1 des Rollen-Umlaufkanals UK1 mit einer von einem Abschnitt TS-1 des Trennstegs TS entfernten Stirnfläche der jeweiligen Rolle R1 an dem ersten Oberflächenbereich 25 des Grundkörpers 11 anliegen und bei einer Bewegung des Führungswagens 10 in der Längsrichtung der Profil-Führungsschiene 5 an dem ersten Oberflächenbereich 25 des Grundkörpers 11 geführt sind.

Entsprechend ist der Führungswagen 10 im vorliegenden Beispiel derart ausgebildet, dass der Grundkörper 11 einen ersten Oberflächenbereich 25 aufweist, welcher sich entlang des ersten Abschnitts UK2-1 des Rollen-Umlaufkanals UK2 jeweils parallel zur ersten E2 derart erstreckt, dass Rollen R1 der ersten Reihe RR1 von Rollen im ersten Abschnitt UK2-1 des Rollen-Umlaufkanals UK2 mit einer von einem Abschnitt TS-1 des Trennsteg TS entfernten Stirnfläche der jeweiligen Rolle R1 an dem ersten Oberflächenbereich 25 des Grundkörpers 11 anliegen und bei einer Bewegung des Führungswagens 10 in der Längsrichtung der Profil-Führungsschiene 5 an dem ersten Oberflächenbereich 25 des Grundkörpers 11 geführt sind.

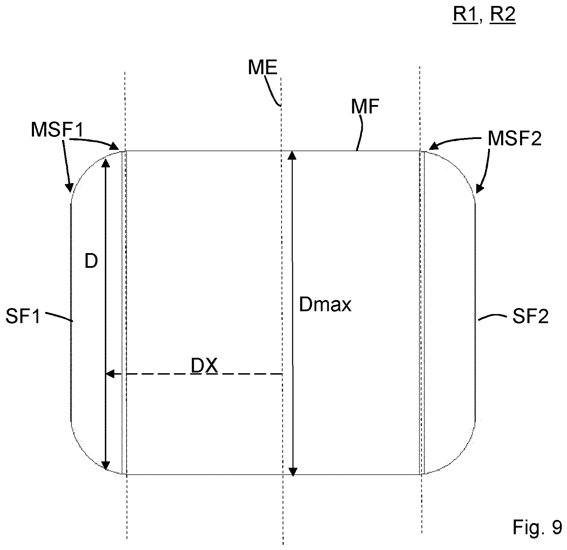

Wie Fig. 8 und 9 andeuten, ist jede der Rollen R1, R2 rotationssymmetrisch bezüglich einer Längsachse der jeweiligen Rolle ausgebildet ist und jede Rolle weist mit Bezug auf die Längsachse der Rolle einen Durchmesser D auf, welcher in Richtung der Längsachse der Rolle eine Variation aufweist, sodass der Durchmesser D der Rolle R1, R2 in einem mittleren Bereich ME zwischen gegenüberliegenden Stirnflächen SF1, SF2 der Rolle einen Maximalwert Dmax aufweist und der Durchmesser D - ausgehend von dem mittleren Bereich ME zwischen den gegenüberliegenden Stirnflächen SF1, SF2 - in Richtung der Längsachse der Rolle als Funktion eines Abstands DX vom mittleren Bereich ME eine mit dem Abstand DX vom mittleren Bereich stetig wachsende Reduktion aufweist.

Weiterhin ist ersichtlich, dass ein Abschnitt TS-1 des Trennstegs TS sich im ersten Abschnitt UK1-1 des Rollen-Umlaufkanals UK1 der Rollen-Umlenkungsvorrichtung UV1 parallel zur ersten Ebene derart E1 erstreckt, dass der Trennsteg mit Bezug auf die eine der Rollen-Laufbahnoberflächen 20 des Grundkörpers 11, welche den ersten Abschnitt UK1-1 des Rollen-Umlaufkanals UK1 der Rollen-Umlenkungsvorrichtung UV1 begrenzt, eine Höhe aufweist, welche kleiner als der Maximalwert Dmax des Durchmessers der Rollen R1, R2 ist.

Ausserdem erstreckt sich ein Abschnitt TS-1 des Trennstegs TS im ersten Abschnitt UK2-1 des Rollen-Umlaufkanals UK2 der Rollen-Umlenkungsvorrichtung UV2 parallel zur ersten Ebene E2 derart, dass der Trennsteg mit Bezug auf die eine der Rollen-Laufbahnoberflächen 21 des Grundkörpers 11, welche den ersten Abschnitt UK2-1 des Rollen-Umlaufkanals UK2 der Rollen-Umlenkungsvorrichtung UV2 begrenzt, eine Höhe aufweist, welche kleiner als der Maximalwert Dmax des Durchmessers der Rollen R1, R2 ist.

Fig. 8 deutet ausserdem an, dass ein Abschnitt TS-1 des Trennstegs TS sich im ersten Abschnitt UK1-1, UK2-1 des Rollen-Umlaufkanals UK1, UK2 der Rollen-Umlenkungsvorrichtung UV1, UV2 mit Bezug auf die eine der Rollen-Laufbahnoberflächen 20, 21 des Grundkörpers 11, welche den ersten Abschnitt UK1-1, UK2-1 des Rollen-Umlaufkanals UK1, UK2 der Rollen-Umlenkungsvorrichtung UV1, UV2 begrenzt, derart parallel zur ersten Ebene E1, E2 erstreckt, dass der Trennsteg einen von der einen der Rollen-Laufbahnoberflächen 20, 21 des Grundkörpers 11 entfernten Endabschnitt TSE aufweist.

Der Abschnitt TS-1 des Trennstegs TS weist im entfernten Endabschnitt TSE einen ersten Vorsprung V1 auf, welcher sich senkrecht zur ersten Ebene E1, E2 derart erstreckt, dass der erste Vorsprung V1 eine an die erste Seitenfläche F1 des Trennstegs TS angrenzende Rolle R1 der ersten Reihe RR1 von Rollen an einem an die erste Seitenfläche F1 des Trennstegs angrenzenden Bereich MSF1, MSF2 einer Mantelfläche MF der Rolle R1 überragt (Fig. 8 und 9). Der Abschnitt TS-1 des Trennstegs TS weist ausserdem im entfernten Endabschnitt TSE einen zweiten Vorsprung V2 auf, welcher sich senkrecht zur ersten Ebene E1, E2 derart erstreckt, dass der zweite Vorsprung V2 eine an die zweite Seitenfläche F2 des Trennstegs TS angrenzende Rolle R2 der zweiten Reihe RR2 von Rollen an einem an die zweite Seitenfläche F2 des Trennstegs TS angrenzenden Bereich MSF1, MSF2 einer Mantelfläche MF der Rolle R2 überragt (Fig. 8 und 9).

Wie in Fig. 7-9 angedeutet, können die Rollen-Umlenkungsvorrichtungen UV1, UV2 eine sich in der Längsrichtung der Profil-Führungsschiene 5 erstreckende Leiste 60 umfassen, welche in der Nähe des Oberflächenbereichs 25 des Grundkörpers 11 derart angeordnet ist, dass die Leiste 60 an die vom Trennsteg TS entfernten Stirnflächen der Rollen R1 angrenzt. Die Leiste 60 kann einen Vorsprung V1 aufweisen, welcher einen an die Leiste 60 angrenzenden Bereich einer Mantelfläche MF der Rollen R1 überragt.

Weiterhin können die Rollen-Umlenkungsvorrichtungen UV1, UV2 eine sich in der Längsrichtung der Profil-Führungsschiene 5 erstreckende Leiste 61 umfassen, welche derart angeordnet ist, dass die Leiste 61 an die vom Trennsteg TS entfernten Stirnflächen der Rollen R2 angrenzt. Die Leiste 61 kann einen Vorsprung V2 aufweisen, welcher einen an die Leiste 61 angrenzenden Bereich einer Mantelfläche MF der Rollen R1 überragt.

Fig. 8 deutet an, dass der Trennsteg TS an der ersten Seitenfläche F1 des Trennstegs TS eine sich entlang des Rollen-Umlaufkanals UK1, UK2 erstreckende erste Nut N1 aufweist, durch welche erste Nut N1 ein Schmiermittel zum Schmieren der Rollen R1 der ersten Reihe RR1 von Rollen in den Rollen-Umlaufkanal UK1, UK2 einführbar ist. Entsprechend weist der Trennsteg TS an der zweiten Seitenfläche F2 des Trennstegs eine sich entlang des Rollen-Umlaufkanals UK1, UK2 erstreckende zweite Nut N2 auf, durch welche zweite Nut N2 ein Schmiermittel zum Schmieren der Rollen R2 der zweiten Reihe RR2 von Rollen in den Rollen-Umlaufkanal UK1, UK2 einführbar ist.

Das Schmiermittel, welches durch die Nuten N1 bzw. N2 transportiert werden soll, kann den Nuten N1 bzw. N2 über die in den Endkappen 12 ausgebildeten Einlassöffnungen 13 zugeführt werden (über Verbindungsleitungen, welche in den Figuren nicht dargestellt sind).

## Patentansprüche

1. Lineare Rollen-Profilschienenführung (1), umfassend:
eine Profil-Führungsschiene (5), welche mindestens vier ebene, sich in einer Längsrichtung der Profil-Führungsschiene (5) erstreckende Rollen-Laufbahnoberflächen (6, 7) aufweist;
einen Führungswagen (10), welcher in der Längsrichtung der Profil-Führungsschiene (5) linear beweglich angeordnet ist und einen Grundkörper (11) umfasst, an welchem mindestens vier ebene, sich in einer Längsrichtung der Profil-Führungsschiene erstreckende Rollen-Laufbahnoberflächen (20, 21) ausgebildet sind;
wobei die Rollen-Laufbahnoberflächen (6, 7) der Profil-Führungsschiene (5) und die Rollen-Laufbahnoberflächen (20, 21) des Grundkörpers (11) relativ zueinander derart angeordnet sind, dass jeweils eine der Rollen-Laufbahnoberflächen (6; 7) der Profil-Führungsschiene (5) und jeweils eine der Rollen-Laufbahnoberflächen (20; 21) des Grundkörpers (11) sich parallel zueinander erstrecken und gegenüberliegend in einem Abstand zueinander derart angeordnet sind, dass die jeweils eine der Rollen-Laufbahnoberflächen (6; 7) der Profil-Führungsschiene (5) und die jeweils eine der Rollen-Laufbahnoberflächen (20; 21) des Grundkörpers (11) einen lasttragenden Rollen-Durchgangskanal (LK1, LK2) begrenzen;
wobei der Führungswagen (10) - für jeden einzelnen der lasttragenden Rollen-Durchgangskanäle (LK1, LK2) - jeweils eine dem jeweiligen einzelnen der lasttragenden Rollen-Durchgangskanäle (LK1, LK2) zugeordnete, vollrollig ausgebildete Rollen-Umlenkungsvorrichtung (UV1, UV2) für mehrere nebeneinander angeordnete Reihen (RR1, RR2) von Rollen (R1, R2) aufweist, welche Rollen-Umlenkungsvorrichtung (UV1, UV2) am Grundkörper (11) befestigt ist und einen sich ringförmig erstreckenden Rollen-Umlaufkanal (UK1, UK2) umfasst, welcher Rollen-Umlaufkanal (UK1, UK2) eine ringförmig geschlossene Rollen-Umlaufbahn für die nebeneinander angeordneten Reihen (RR1, RR2) von Rollen (R1, R2) definiert,
wobei der Rollen-Umlaufkanal (UK1, UK2) der Rollen-Umlenkungsvorrichtung (UV1, UV2) umfasst:
einen ersten Abschnitt (UK1-1, UK2-1) des Rollen-Umlaufkanals (UK1, UK2), welcher mit dem jeweiligen einzelnen der lasttragenden Rollen-Durchgangskanäle (LK1, LK2) identisch ist,
einen zweiten Abschnitt (UK1-2, UK2-2) des Rollen-Umlaufkanals (UK1, UK2), welcher sich in einem Abstand zum ersten Abschnitt (UK1-1, UK2-1) des Rollen-Umlaufkanals in der Längsrichtung der Profil-Führungsschiene erstreckt,
einen dritten und einen vierten Abschnitt (UK1-3, UK2-3, UK1-4, UK2-4) des Rollen-Umlaufkanals (UK1, UK2), wobei der dritte Abschnitt (UK1-3, UK2-3) des Rollen-Umlaufkanals (UK1, UK2) eines von zwei gegenüberliegenden Enden des ersten Abschnitts (UK1-1, UK2-1) des Rollen-Umlaufkanals (UK1, UK2) mit einem von zwei gegenüberliegenden Enden des zweiten Abschnitts (UK1-2, UK2-2) des Rollen-Umlaufkanals (UK1, UK2) verbindet und der vierte Abschnitt (UK1-4, UK2-4) des Rollen-Umlaufkanals das andere der zwei gegenüberliegenden Enden des ersten Abschnitts (UK1-1, UK2-1) des Rollen-Umlaufkanals mit einem anderen der zwei gegenüberliegenden Enden des zweiten Abschnitts (UK1-2, UK2-2) des Rollen-Umlaufkanals (UK1, UK2) verbindet;
wobei die dem jeweiligen einzelnen der lasttragenden Rollen-Durchgangskanäle (LK1, LK2) zugeordnete Rollen-Umlenkungsvorrichtung (UV1, UV2) zumindest eine erste Reihe (RR1) von Rollen (R1) und eine zweite Reihe (RR2) von Rollen (R2) umfasst, wobei die erste Reihe (RR1) von Rollen (R1) und die zweite Reihe (RR2) von Rollen (R2) jeweils eine Mehrzahl hintereinander angeordneter Rollen (R1, R2) aufweisen und die erste Reihe (RR1) von Rollen und die zweite Reihe (RR2) von Rollen im Rollen-Umlaufkanal (UK1, UK2) der Rollen-Umlenkungsvorrichtung (UV1, UV2) nebeneinander derart angeordnet sind, dass bei einer Bewegung des Führungswagens (10) in der Längsrichtung der Profil-Führungsschiene (5) die Rollen (R1) der ersten Reihe (RR1) von Rollen und die Rollen (R2) der zweiten Reihe (RR2) von Rollen nebeneinander entlang der ringförmig geschlossenen Rollen-Umlaufbahn durch den Rollen-Umlaufkanal (UK1, UK2) jeweils parallel zu einer vorgegebenen ersten Ebene (E1, E2) zirkulieren;
**dadurch gekennzeichnet, dass**
die dem jeweiligen einzelnen der lasttragenden Rollen-Durchgangskanäle (LK1, LK2) zugeordnete, vollrollig ausgebildete Rollen-Umlenkungsvorrichtung (UV1, UV2) einen Trennsteg (TS) aufweist, welcher ortsfest relativ zum Grundkörper (11) angeordnet ist und sich im Rollen-Umlaufkanal (UK1, UK2) jeweils parallel zur ersten Ebene (E1, E2) durch den ersten Abschnitt (UK1-1, UK2-1), den zweiten Abschnitt (UK1-2, UK2-2), den dritten Abschnitt (UK1-3, UK2-3) und den vierten Abschnitt (UK1-4, UK2-4) des Rollen-Umlaufkanals (UK1, UK2) erstreckt und zwischen der ersten Reihe (RR1) von Rollen (R1) und der zweiten Reihe (RR2) von Rollen (R2) derart angeordnet ist, dass der Trennsteg (TS) die Rollen (R1) der ersten Reihe (RR1) von Rollen von den Rollen (R2) der zweiten Reihe (RR2) von Rollen räumlich separiert;
wobei jede Rolle (R1) der ersten Reihe (RR1) von Rollen mit einer Stirnfläche (SF1, SF2) der jeweiligen Rolle (R1) an eine erste Seitenfläche (F1) des Trennstegs (TS) angrenzt, sodass jede Rolle (R1) der ersten Reihe (RR1) von Rollen bei einer Bewegung des Führungswagens (10) in der Längsrichtung der Profil-Führungsschiene (5) an der ersten Seitenfläche (F1) des Trennstegs (TS)anliegt,
und
wobei jede Rolle (R2) der zweiten Reihe (RR2) von Rollen mit einer Stirnfläche (SF1, SF2) der jeweiligen Rolle an eine zweite Seitenfläche (F2) des Trennstegs angrenzt, sodass jede Rolle der zweiten Reihe (R2) von Rollen bei einer Bewegung des Führungswagens (10) in der Längsrichtung der Profil-Führungsschiene (5) an der zweiten Seitenfläche (F2) des Trennstegs geführt ist.

2. Lineare Rollen-Profilschienenführung (1) gemäss Anspruch 1, wobei der Trennsteg (TS) im Rollen-Umlaufkanal (UK1, UK2) der Rollen-Umlenkungsvorrichtung (UV1, UV2) derart angeordnet ist, dass sich der Trennsteg (TS) lückenlos über die gesamte Länge des Rollen-Umlaufkanals (UK1, UK2) entlang der ringförmig geschlossenen Rollen-Umlaufbahn für die nebeneinander angeordneten Reihen (RR1, RR2) von Rollen (R1, R2) erstreckt.

3. Lineare Rollen-Profilschienenführung (1) gemäss einem der Ansprüche 1 - 2, wobei der Grundkörper (11) einen ersten Oberflächenbereich (25) aufweist, welcher sich entlang des ersten Abschnitts (UK1-1, UK2-1) des Rollen-Umlaufkanals (UK1, UK2) jeweils parallel zur ersten Ebene (E1, E2) derart erstreckt, dass Rollen (R1) der ersten Reihe (RR1) von Rollen im ersten Abschnitt (UK1-1, UK2-1) des Rollen-Umlaufkanals (UK1, UK2) mit einer vom Trennsteg (TS-1) entfernten Stirnfläche der jeweiligen Rolle (R1) an dem ersten Oberflächenbereich (25) des Grundkörpers (11) anliegen und bei einer Bewegung des Führungswagens (10) in der Längsrichtung der Profil-Führungsschiene (5) an dem ersten Oberflächenbereich (25) des Grundkörpers (11) geführt sind.

4. Lineare Rollen-Profilschienenführung (1) gemäss einem der Ansprüche 1 - 3, wobei
die Rollen-Umlenkungsvorrichtung (UV1, UV2) aus mehreren Einzelteilen zusammengesetzt ist und der Trennsteg (TS) mehrere Abschnitte (TS-1, TS-2, TS-3, TS-4) aufweist, wobei
eines der Einzelteile einen Abschnitt des Trennstegs (TS-1) umfasst, welcher sich mindestens über einen Teil der Länge des ersten Abschnitts (UK1-1, UK2-1) des Rollen-Umlaufkanals (UK1, UK2) erstreckt, und/oder
eines der Einzelteile einen Abschnitt des Trennstegs (TS-2) umfasst, welcher sich mindestens über einen Teil der Länge des zweiten Abschnitts (UK1-2, UK2-2) des Rollen-Umlaufkanals (UK1, UK2) erstreckt, und/oder
eines der Einzelteile einen Abschnitt des Trennstegs (TS-3) umfasst, welcher sich mindestens über einen Teil der Länge des dritten Abschnitts (UK1-3, UK2-3) des Rollen-Umlaufkanals (UK1, UK2) erstreckt, und/oder
eines der Einzelteile einen Abschnitt des Trennstegs (TS-4) umfasst, welcher sich mindestens über einen Teil der Länge des vierten Abschnitts (UK1-4, UK2-4) des Rollen-Umlaufkanals (UK1, UK2) erstreckt.

5. Lineare Rollen-Profilschienenführung (1) gemäss einem der Ansprüche 1- 4, wobei
jede der Rollen (R1, R2) rotationssymmetrisch bezüglich einer Längsachse der jeweiligen Rolle ausgebildet ist und jede Rolle mit Bezug auf die Längsachse der Rolle einen Durchmesser aufweist, welcher in Richtung der Längsachse der Rolle eine Variation aufweist, sodass der Durchmesser der Rolle in einem mittleren Bereich zwischen gegenüberliegenden Stirnflächen (SF1, SF2) der Rolle einen Maximalwert (Dmax) aufweist und der Durchmesser - ausgehend von dem mittleren Bereich zwischen den gegenüberliegenden Stirnflächen - in Richtung der Längsachse der Rolle als Funktion eines Abstands vom mittleren Bereich eine mit dem Abstand vom mittleren Bereich stetig wachsende Reduktion aufweist; und wobei
der Trennsteg (TS-1) sich im ersten Abschnitt (UK1-1, UK2-1) des Rollen-Umlaufkanals (UK1, UK2) der Rollen-Umlenkungsvorrichtung (UV1, UV2) parallel zur ersten Ebene derart (E1, E2) erstreckt, dass der Trennsteg mit Bezug auf die eine der Rollen-Laufbahnoberflächen (20, 21) des Grundkörpers (11), welche den ersten Abschnitt (UK1-1, UK2-1) des Rollen-Umlaufkanals (UK1, UK2) der Rollen-Umlenkungsvorrichtung (UV1, UV2) begrenzt, eine Höhe aufweist, welche kleiner als der Maximalwert (Dmax) des Durchmessers der Rollen (R1, R2) ist.

6. Lineare Rollen-Profilschienenführung (1) gemäss Anspruch 5, wobei der Trennsteg (TS-1) sich im ersten Abschnitt (UK1-1, UK2-1) des Rollen-Umlaufkanals (UK1, UK2) der Rollen-Umlenkungsvorrichtung (UV1, UV2) mit Bezug auf die eine der Rollen-Laufbahnoberflächen (20, 21) des Grundkörpers (11), welche den ersten Abschnitt (UK1-1, UK2-1) des Rollen-Umlaufkanals (UK1, UK2) der Rollen-Umlenkungsvorrichtung (UV1, UV2) begrenzt, derart parallel zur ersten Ebene (E1, E2) erstreckt, dass der Trennsteg einen von der einen der Rollen-Laufbahnoberflächen (20, 21) des Grundkörpers (11) entfernten Endabschnitt (TSE) aufweist;
wobei der Trennsteg (TS-1) im entfernten Endabschnitt (TSE) einen ersten Vorsprung (V1) aufweist, welcher sich senkrecht zur ersten Ebene (E1, E2) derart erstreckt, dass der erste Vorsprung (V1) eine an die erste Seitenfläche (F1) des Trennstegs angrenzende Rolle (R1) der ersten Reihe (RR1) von Rollen an einem an die erste Seitenfläche (F1) des Trennstegs angrenzenden Bereich einer Mantelfläche (MF) der Rolle überragt; und
wobei der Trennsteg (TS-1) im entfernten Endabschnitt (TSE) einen zweiten Vorsprung (V2) aufweist, welcher sich senkrecht zur ersten Ebene (E1, E2) derart erstreckt, dass der zweite Vorsprung (V2) eine an die zweite Seitenfläche (F2) des Trennstegs (TS-1) angrenzende Rolle (R2) der zweiten Reihe (RR2) von Rollen an einem an die zweite Seitenfläche (F2) des Trennstegs (TS-1) angrenzenden Bereich einer Mantelfläche (MF) der Rolle überragt.

7. Lineare Rollen-Profilschienenführung (1) gemäss einem der Ansprüche 1- 6, wobei
der Trennsteg (TS) an der ersten Seitenfläche (F1) des Trennstegs (TS) eine sich entlang des Rollen-Umlaufkanals (UK1, UK2) erstreckende erste Nut (N1) aufweist, durch welche erste Nut (N1) ein Schmiermittel zum Schmieren der Rollen (R1) der ersten Reihe (RR1) von Rollen in den Rollen-Umlaufkanal (UK1, UK2) einführbar ist, und/oder
der Trennsteg (TS) an der zweiten Seitenfläche (F2) des Trennstegs eine sich entlang des Rollen-Umlaufkanals (UK1, UK2) erstreckende zweite Nut (N2) aufweist, durch welche zweite Nut (N2) ein Schmiermittel zum Schmieren der Rollen (R2) der zweiten Reihe (RR2) von Rollen in den Rollen-Umlaufkanal (UK1, UK2) einführbar ist.

8. Lineare Rollen-Profilschienenführung (1) gemäss einem der Ansprüche 1- 7, wobei
der Trennsteg (TS) aus einem Kunststoff gefertigt ist oder zumindest ein Abschnitt (TS-1, TS-2, TS-3, TS-4) des Trennstegs aus einem Kunststoff gefertigt ist.

9. Lineare Rollen-Profilschienenführung gemäss einem der Ansprüche 1-8, wobei
ein sich im ersten Abschnitt (UK1-1, UK2-1) des Rollen-Umlaufkanals (UK1, UK2) erstreckender Abschnitt des Trennstegs (TS-1) aus einem metallischen Werkstoff, beispielsweise Stahl, gefertigt ist.
